# EUROPEAN PATENT APPLICATION

(11) **EP 4 620 608 A1**
(43) Date of publication of application: **24.09.2025**
(21) Application number: 22965827.3
(22) Date of filing: 17.11.2022
(51) Int. Cl.: B23K 26/067, B23K 26/082

(54) **PROCESSING SYSTEM**

(71) Applicant: NIKON CORPORATION, Tokyo 140-8601 (JP)
(72) Inventor: NAITO, Kaneyuki, Tokyo 140-8601 (JP)
(74) Representative: Hoffmann Eitle
(86) International application number: PCT/JP2022/042713
(87) International publication number: WO 2024/105851

(57) **Abstract**

A processing system includes: a processing apparatus that processes an object by irradiating the object with beams to form arranged irradiation areas on a surface of the object; and a control apparatus that controls the processing apparatus, the processing apparatus includes: a generation apparatus that generates the beams; a first movement apparatus that moves the beams generated by the generation apparatus; and a second movement apparatus that changes an arrangement direction along which the irradiation areas are arranged, the control apparatus controls the first movement apparatus so that the irradiation areas move along a target movement route and controls the second movement apparatus so as to change the arrangement direction of the irradiation areas based on the target movement route.

## Description

### Technical Field

The present invention relates to a technical field of a processing system that is configured to process an object, for example.

### Background Art

A Patent literature 1 discloses a processing system that processes an object by irradiating the object with laser light. This type of processing system is required to properly process the object.

### Citation List

### Patent Literature

Patent Literature 1: US2002/0017509A1

### Summary of Invention

A first aspect provides a processing system including: a processing apparatus that irradiates an object with a plurality of processing beams, which are spatially separated from each other, to form a plurality of arranged irradiation areas on a surface of the object, and that processes the object by moving the plurality of irradiation areas on the surface of the object; and a control apparatus that controls the processing apparatus, wherein the processing apparatus includes: a beam generation apparatus that generates the plurality of processing beams; a first beam movement apparatus to which the plurality of processing beams generated by the beam generation apparatus enter and that moves the plurality of processing beams propagating toward the object; and a second beam movement apparatus that changes an arrangement direction along which the plurality of irradiation areas are arranged, the control apparatus controls the first beam movement apparatus so that the plurality of irradiation areas move along a target movement route on the surface of the object, and the control apparatus controls the second beam movement apparatus so as to change the arrangement direction of the plurality of irradiation areas based on the target movement route.

A second aspect provides a processing system including: a processing apparatus that irradiates an object with a plurality of processing beams, which are spatially separated from each other, through an irradiation optical system to form a plurality of irradiation areas on a surface of the object, and that processes the object by moving the plurality of irradiation areas on the surface of the object, wherein the processing apparatus includes: a beam generation apparatus that generates the plurality of processing beams; and a beam movement apparatus that moves the plurality of processing beams, which propagates toward the object through the irradiation optical system, by changing deflected angles of the plurality of processing beams generated by the beam generation apparatus, and an entrance direction of one processing beam of the plurality of processing beams entering the beam movement apparatus is different from an entrance direction of another processing beam, which is different from the one processing beam, of the plurality of processing beams entering the beam movement apparatus.

A third aspect provides a processing system including: a processing apparatus that irradiates an object with a plurality of processing beams, which are spatially separated from each other, to form a plurality of irradiation areas on a surface of the object, and that processes the object by moving the plurality of irradiation areas on the surface of the object; and a control apparatus that controls the processing apparatus, wherein the processing apparatus includes: a beam generation apparatus that generates the plurality of processing beams; and an irradiation optical system that condenses the plurality of processing beams generated by the beam generation apparatus to form a plurality of irradiation areas on the surface of the object, the control apparatus moves each of the plurality of irradiation areas move along a target movement route on the surface of the object.

An operation and another advantage of the present invention will be apparent from an example embodiment described below.

### Brief Description of Drawings

[FIG. 1] FIG. 1 is a cross-sectional view that schematically illustrates one example of a configuration of a processing system in a present example embodiment.
[FIG. 2] FIG. 2 is a block diagram that illustrates one example of the configuration of the processing system in the present example embodiment.
[FIG. 3] FIG. 3 is a cross-sectional view that illustrates a configuration of a processing head in the present example embodiment.
[FIG. 4] FIG. 4 is a cross-sectional view that illustrates a configuration of a processing optical system in the present example embodiment.
[FIG. 5] Each of FIG. 5(a) to FIG. 5(c) is a plan view that illustrates a plurality of irradiation areas onto which a plurality of processing lights are irradiated, respectively.
[FIG. 6] FIG. 6 is a cross-sectional view that illustrates a diffractive optical element rotated by an actuator.
[FIG. 7] FIG. 7 is a plan view that illustrates the plurality of irradiation areas formed on a workpiece.
[FIG. 8] FIG. 8(a) is a perspective view that illustrates a riblet structure, FIG. 8(b) is a cross-sectional view (a XIII-XIII' cross-sectional view in FIG. 8(a)) that illustrates the riblet structure, and FIG. 8(c) is a top view that illustrates the riblet structure.
[FIG. 9] FIG. 9 is a plan view that illustrates one example of a processing path.
[FIG. 10] FIG. 10 is a planar view that illustrates the riblet structure formed by using the processing path illustrated in FIG. 9.
[FIG. 11] Each of FIG. 11(a) to FIG. 11(c) is a plan view that illustrates one example of a relationship between a path direction, which is a direction along which the processing path extends, and an arrangement direction along which the plurality of irradiation areas are arranged.
[FIG. 12] Each of FIG. 12(a) and FIG. 12(b) is a plan view that illustrates the processing path whose path direction changes.
[FIG. 13] FIG. 13 is a plan view that illustrates one example of the relationship between the path direction and the arrangement direction.
[FIG. 14] FIG. 14 is a plan view that illustrates one example of the relationship between the path direction and the arrangement direction.
[FIG. 15] FIG. 15 is a plan view that illustrates one example of the relationship between the path direction and the arrangement direction.
[FIG. 16] Each of FIG. 16(a) to FIG. 16(c) is a plan view that illustrates a pitch of the plurality of irradiation areas in a first modified example.
[FIG. 17] Each of FIG. 17(a) to FIG. 17(b) is a graph that illustrates a relationship between a curvature of the processing path and the pitch of the plurality of irradiation areas.
[FIG. 18] Each of FIG. 18(a) to FIG. 18(b) is a plan view that illustrates the pitch of the plurality of irradiation areas in the first modified example.
[FIG. 19] Each of FIG. 19(a) to FIG. 19(d) is a plan view that illustrates the number of the plurality of irradiation areas in a second modified example.
[FIG. 20] Each of FIG. 20(a) and FIG. 20(b) is a cross-sectional view that illustrates a light shield member that is configured to shield at least one of the plurality of processing lights EL.
[FIG. 21] FIG. 21(a) is a cross-sectional view that illustrates the processing optical system positioned on an optical path of a light source light, and FIG. 21(b) is a cross-sectional view that illustrates the processing optical system not positioned on the optical path of the light source light.
[FIG. 22] Each of FIG. 22(a) to FIG. 22(c) is a plan view that illustrates the pitch of the plurality of irradiation areas in the second modified example.
[FIG. 23] FIG. 23 is a cross-sectional view that illustrates a configuration of the processing optical system in a third modified example.
[FIG. 24] FIG. 24 is a cross-sectional view that illustrates a configuration of the processing optical system in the third modified example.
[FIG. 25] FIG. 25 is a plan view that illustrates a change of the arrangement direction of the plurality of irradiation areas in a fifth modified example.

### Description of Example embodiments

Next, with reference to drawings, an example embodiment of a process system will be described. In the below described description, the example embodiment of the process system will be described by using a processing system SYS that is configured to process a workpiece W that is one example of an object. However, the present invention is not limited to the below described example embodiment.

Moreover, in the below-described description, a positional relationship of various components included in the processing system SYS will be described by using an XYZ rectangular coordinate system that is defined by an X-axis, a Y-axis and a Z-axis that are orthogonal to one another. Note that each of an X-axis direction and a Y-axis direction is assumed to be a horizontal direction (namely, a predetermined direction in a horizontal plane) and a Z-axis direction is assumed to be a vertical direction (namely, a direction that is orthogonal to the horizontal plane, and substantially a vertical direction) in the below-described description, for convenience of the description. Moreover, rotational directions (in other words, inclination directions) around the X-axis, the Y-axis and the Z-axis are referred to as a θX direction, a θY direction and a θZ direction, respectively. Here, the Z-axis direction may be a gravity direction. Moreover, an XY plane may be a horizontal direction.

### (1) Configuration of Processing System SYS

Firstly, a configuration of the processing system SYS in the present example embodiment will be described.

### (1-1) Entire Configuration of Processing system SYS

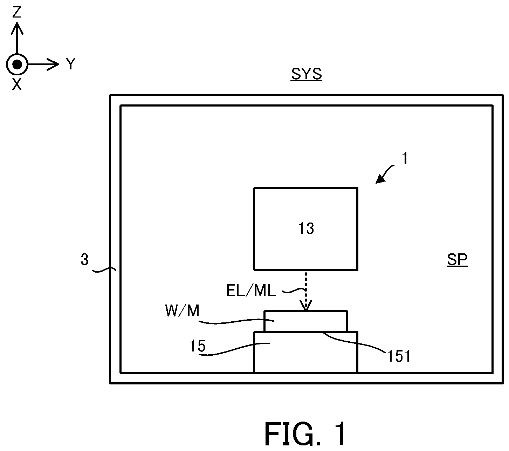

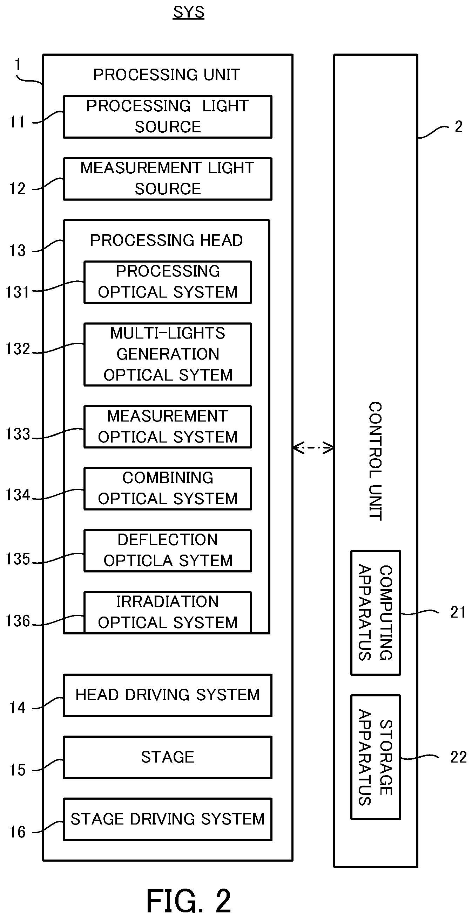

First, with reference to FIG. 1 and FIG. 2, an entire configuration of the processing system SYS in the present example embodiment will be described. FIG. 1 is a cross-sectional view that schematically illustrates one example of the configuration of the processing system SYS in the present example embodiment. FIG. 2 is a block diagram that illustrates one example of the configuration of the processing system SYS in the present example embodiment.

As illustrated in FIG. 1 and FIG. 2, the processing system SYS includes a processing unit 1, and a control unit 2. Incidentally, the processing unit 1 may be referred to as a processing apparatus, and the control unit 2 may be referred to as a control apparatus. At least a part of the processing unit 1 may be contained in an inner space SP1 in a housing 3. The inner space SP1 in the housing 3 may be purged with purge gas (namely, gas), or may not be purged with the purge gas. The purge gas may include at least one of inert gas and CDA (Clean Dry Air), for example. The inert gas may include at least one of nitrogen gas and argon gas, for example. The inner space SP1 in the housing 3 may be vacuumed or may not be vacuumed. However, the processing unit 1 may not be contained in the inner space SP1 in the housing 3. A local space surrounding only a part of the processing unit 1 may be purged with the purge gas or may be vacuumed.

The processing unit 1 is configured to process a workpiece W that is a processing target object (it may be referred to as a base member) under the control of the control unit 2. The workpiece W may be a metal, may be an alloy (for example, duralumin and the like), may be a semiconductor (for example, silicon), may be a resin, may be a composited material such as a CFRP (Carbon Fiber Reinforced Plastic), may be a painting material (as one example, a film of painting material that is coated on a base member), may be a glass, or may be an object that is made from any other material, for example.

The processing unit 1 irradiates the workpiece W with processing light EL in order to process the workpiece W. The processing light EL may be any light as long as the workpiece W is processed by irradiating the workpiece W with it. In the present example embodiment, an example in which the processing light EL is laser light will be described, however, the processing light EL may be light that is different from the laser light. Furthermore, a wavelength of the processing light EL may be any wavelength as long as the workpiece W is processed by irradiating the workpiece W with it. For example, the processing light EL may be visible light, or may be invisible light (for example, at least one of infrared light, ultraviolet light, extreme ultraviolet light, and the like). The processing light EL may include pulsed light. Alternatively, the processing light EL may not include the pulsed light. In other words, the processing light EL may be continuous light. Incidentally, the processing light EL may be referred to as a processing beam because light is one example of an energy beam.

The processing unit 1 is further configured to measure a measurement target object M under the control of the control unit 2. The processing unit 1 irradiates the measurement target object M with measurement light ML for measuring the measurement target object M in order to measure the measurement target object M. Namely, the processing unit 1 measures the measurement target object M by using a measurement method using the measurement light ML. Specifically, the processing unit 1 measures the measurement target object M by irradiating the measurement target object M with the measurement light ML and detecting (namely, optically receiving) at least a part of returned light RL that returns from the measurement target object M onto which the measurement light ML is irradiated. The returned light RL returning from the measurement target object M onto which the measurement light ML is irradiated is light from the measurement target object M that is generated by the irradiation with the measurement light ML. However, the processing unit 1 measures the measurement target object M by using a measurement method that is different from the measurement method using the measurement light ML.

The measurement light ML may be any type of light, as long as the measurement target object M is measurable by irradiating the measurement target object M with it. In the present example embodiment, an example in which the measurement light ML is a laser light will be described. However, the measurement light ML may be a light that is different from the laser light. Furthermore, a wavelength of the measurement light ML may be any wavelength, as long as the measurement target object M is measurable by irradiating the measurement target object M with it. For example, the measurement light ML may be visible light, or may be invisible light (for example, at least one of infrared light, ultraviolet light, extreme ultraviolet light, and the like). The measurement light ML may include pulsed light (for example, pulsed light an ON time of which is equal to or shorter than pico-seconds). Alternatively, the measurement light ML may not include the pulsed light. In other words, the measurement light ML may be continuous light. Incidentally, the measurement light ML may be referred to as a measurement beam because light is one example of an energy beam.

The processing unit 1 may be configured to measure a characteristic of the measurement target object M by using the measurement light ML. The characteristic of the measurement target object M may include at least one of a position of the measurement target object M, a shape of the measurement target object M, a reflectance of the measurement target object M, a transmittance of the measurement target object M, a temperature of the measurement target object M, and a surface roughness of the measurement target object M, for example.

The measurement target object M may include the workpiece W that is processed by the processing unit 1, for example. The measurement target object M may include any object placed on a below-described stage 15, for example. The measurement target object M may include the stage 15, for example.

In order to process the workpiece W and measure the measurement target object M, the processing unit 1 includes a processing light source 11, a measurement light source 12, the processing head 13, a head driving system 14, the stage 15, and a stage driving system 16.

The processing light source 11 generates light source light SL. In a case where the processing light EL is the laser light, the processing light source 11 may include a laser diode, for example. Furthermore, the processing light source 11 may be a light source that is configured to perform a pulsed oscillation. In this case, the processing light source 11 is configured to generate the pulsed light as the light source light SL. Incidentally, the processing light source 11 may be a CW light source that generates the CW (continuous wave). Moreover, light may be referred to as a light source beam or a light beam because the light is one example oof an energy beam.

The measurement light source 12 generates the measurement light ML. In a case where the measurement light ML is the laser light, the measurement light source 12 may include a laser diode, for example. Furthermore, the measurement light source 12 may be a light source that is configured to perform a pulsed oscillation. In this case, the measurement light source 12 is configured to generate the pulsed light as the processing light EL. Incidentally, the measurement light source 12 may be a CW light source that generates the CW (continuous wave).

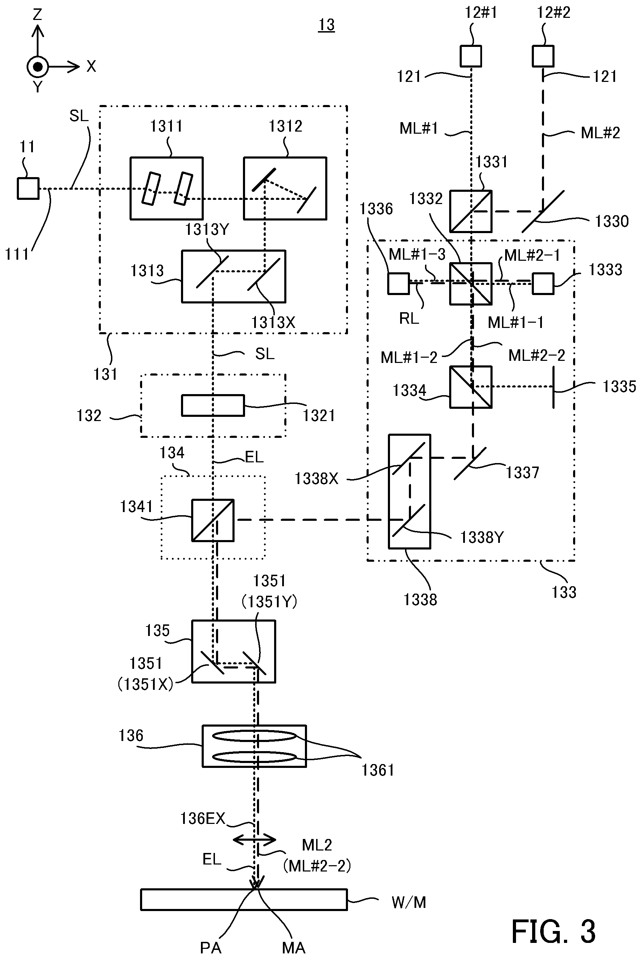

The processing head 13 generates a plurality of processing lights EL from the light source light SL generated by the processing light source 11, and irradiates the workpiece W with the plurality of generated processing lights EL. Furthermore, the processing head 13 irradiates the measurement target object M with the measurement light ML generated by the measurement light source 12. In order to irradiate the workpiece W with the plurality of processing lights EL and to irradiate the measurement target object M with the measurement light ML, the processing head 13 includes a processing optical system 131, a multi-lights generation optical system 132, a measurement optical system 133, a combining optical system 134, a deflection optical system 135, and an irradiation optical system 136. The processing head 13 irradiates the workpiece W with the processing light EL through the processing optical system 131, the multi-lights generation optical system 132, the combining optical system 134, the deflection optical system 135, and the irradiation optical system 136. Moreover, the processing head 13 irradiates the measurement target object M with the measurement light ML through the measurement optical system 133, the combining optical system 134, the deflection optical system 135, and the irradiation optical system 136. Incidentally, a configuration of the processing head 13 will be described in more detail later, with reference to FIG. 3.

The head driving system 14 moves the processing head 13. Therefore, the head driving system 14 may be referred to as a movement apparatus. Incidentally, since the processing head 13 includes the processing optical system 131, the multi-lights generation optical system 132, the measurement optical system 133, the combining optical system 134, the deflection optical system 135, and the irradiation optical system 136, the head driving system 14 may be considered to move the processing optical system 131, the multi-lights generation optical system 132, the measurement optical system 133, combining optical system 134, the deflection optical system 135, and the irradiation optical system 136. The head driving system 14 may move (namely, linearly move) the processing head 13 along a movement axis that is along at least one of the X-axis direction, the Y-axis direction, and the Z-axis direction, for example. The head driving system 14 may move the processing head 13 along at least one of the θX direction, the θY direction, and the θZ direction, in addition to or instead of at least one of the X-axis direction, the Y-axis direction, and the Z-axis direction, for example. Namely, the head driving system 14 may rotate (namely, rotationally move) the processing head 13 around at least one rotational axis of a rotational axis along the X-axis direction (namely, an A-axis), a rotational axis along the Y-axis direction (namely, a B-axis), and a rotational axis along the Z-axis direction (namely, a C-axis).

When the head driving system 14 moves the processing head 13, a relative positional relationship between the stage 15 (furthermore, the workpiece W placed on the stage 15) and the processing head 13 changes. Therefore, a relative positional relationship between the workpiece W and a plurality of irradiation areas PA, onto which the processing head 13 irradiates the plurality of processing lights EL, respectively, changes. Namely, the plurality of irradiation areas PA, onto which the processing head 13 irradiates the plurality of processing lights EL, respectively, moves relative to the workpiece W. The processing unit 1 may process the workpiece W while moving the processing head 13. Specifically, the processing unit 1 may process desired positions of the workpiece W by moving the processing head 13 so that the desired positions of the workpiece W are irradiated with the plurality of processing lights EL, respectively.

Furthermore, when the head driving system 14 moves the processing head 13, a relative positional relationship between the measurement target object M and an irradiation area MA onto which the processing head 13 irradiates the measurement light ML changes. Namely, the irradiation area MA, onto which the processing head 13 irradiates the measurement light ML, moves relative to the workpiece W. In other words, a position on the workpiece W, onto which the processing head 13 irradiates the measurement light ML, changes. The processing unit 1 may measure the measurement target object M while moving the processing head 13. Specifically, the processing unit 1 may measure a desired position of the measurement target object M by moving the processing head 13 so that the desired position of the measurement target object M is irradiated with the measurement light ML.

Furthermore, when the head driving system 14 moves the processing head 13, a relative positional relationship between t the processing head 13 (especially, the irradiation optical system 136 of the processing head 13) and the workpiece W placed on the stage 15 changes. For example, the positional relationship between the processing head 13 (especially, the irradiation optical system 136) and the workpiece W along at least one of the X-axis direction, the Y-axis direction, and the Z-axis direction may change. For example, the position relationship between the processing head 13 (especially, the irradiation optical system 136) and the workpiece W along at least one of the θX direction, the θY direction, and the θZ direction may change. Therefore, the head driving system 14 may be considered to serve as a change apparatus that is configured to change the positional relationship between the processing head 13 (especially, the irradiation optical system 136) and the workpiece W.

The positional relationship between the processing head 13 (especially, the irradiation optical system 136) and the workpiece W along at least one of the θX direction, the θY direction, and the θZ direction may be regarded as a postural relationship between the processing head 13 (especially, the irradiation optical system 136) and the workpiece W. Therefore, the head driving system 14 may be considered to serve as a posture change apparatus that is configured to change the postural relationship between the processing head 13 (especially, the irradiation optical system 136) and the workpiece W. In other words, the head driving system 14 may be considered to serve as a posture change apparatus that is configured to change the posture of the processing head 13 (especially the irradiation optical system 136) relative to the workpiece W.

Incidentally, simply changing the positional relationship between the processing head 13 (especially, the irradiation optical system 136) and the workpiece W by the head driving system 14 moving the processing head 13 does not change a positional relationship between the plurality of irradiation areas PA, onto which the plurality of processing lights EL are irradiated on the workpiece W, and the irradiation area MA, onto which the measurement light ML is irradiated. Namely, even in a case where the positional relationship between the processing head 13 (especially, the irradiation optical system 136) and the workpiece W is changed by using the head driving system 14 to move the processing head 13, the positional relationship between the plurality of irradiation areas PA and the irradiation area MA on the workpiece W is maintained. This is because the plurality of processing lights EL and the measurement lights ML are emitted from the same processing head 13.

The workpiece W is placed on the stage 15. Therefore, the stage 15 may be referred to as a placing apparatus or an object placing apparatus. Specifically, the workpiece W is placed on a placement surface 151 that is at least a part of an upper surface of the stage 15. The stage 15 is configured to support the workpiece W placed on the stage 15. The stage 15 may be configured to hold the workpiece W placed on the stage 15. In this case, the stage 15 may include at least one of a mechanical chuck, an electrostatic chuck, and a vacuum suction chuck to hold the workpiece W. Alternatively, a jig for holding the workpiece W may hold the workpiece W, and the stage 15 may hold the jig holding the workpiece W. Alternatively, the stage 15 may not hold the workpiece W placed on the stage 15. In this case, the workpiece W may be placed on the stage 15 without clamp.

The stage driving system 16 moves the stage 15. Therefore, the stage driving system 16 may be referred to as a movement apparatus. The stage driving system 16 may move (namely, linearly move) the stage 15 along a movement axis that is along at least one of the X-axis direction, the Y-axis direction, and the Z-axis direction, for example. The stage driving system 16 may move the stage 15 along at least one of the θX direction, the θY direction, and the θZ direction, in addition to or instead of at least one of the X-axis direction, the Y-axis direction, and the Z-axis direction, for example. Namely, the stage driving system 16 may rotate (namely, rotationally move) the stage 15 around at least one rotational axis of a rotational axis along the X-axis direction (namely, an A-axis), a rotational axis along the Y-axis direction (namely, a B-axis), and a rotational axis along the Z-axis direction (namely, a C-axis).

When the stage driving system 16 moves the stage 15, the relative positional relationship between the stage 15 (furthermore, the workpiece W placed on the stage 15) and the processing head 13 changes. Therefore, the relative positional relationship between the workpiece W and the plurality of irradiation areas PA, onto which the processing head 13 irradiates the plurality of processing lights EL, respectively, changes. Namely, the plurality of irradiation areas PA, onto which the processing head 13 irradiates the plurality of processing lights EL, respectively, moves relative to the workpiece W. The processing unit 1 may process the workpiece W while moving the stage 15. Specifically, the processing unit 1 may process desired positions of the workpiece W by moving the stage 15 so that the desired positions of the workpiece W are irradiated with the plurality of processing lights EL, respectively.

Furthermore, when the stage driving system 16 moves the stage 15, the relative positional relationship between the measurement target object M and the irradiation area MA onto which the processing head 13 irradiates the measurement light ML changes. Namely, the irradiation area MA, onto which the processing head 13 irradiates the measurement light ML, moves relative to the workpiece W. In other words, the position on the workpiece W, onto which the processing head 13 irradiates the measurement light ML, changes. The processing unit 1 may measure the measurement target object M while moving the stage 15. Specifically, the processing unit 1 may measure a desired position of the measurement target object M by moving the stage 15 so that the desired position of the measurement target object M is irradiated with the measurement light ML.

Furthermore, when the stage driving system 16 moves the stage 15, the relative positional relationship between t the processing head 13 (especially, the irradiation optical system 136 of the processing head 13) and the workpiece W placed on the stage 15 changes. For example, the positional relationship between the processing head 13 (especially, the irradiation optical system 136) and the workpiece W along at least one of the X-axis direction, the Y-axis direction, and the Z-axis direction may change. For example, the position relationship between the processing head 13 (especially, the irradiation optical system 136) and the workpiece W along at least one of the θX direction, the θY direction, and the θZ direction may change. Therefore, the stage driving system 16 may be considered to serve as a change apparatus that is configured to change the positional relationship between the processing head 13 (especially, the irradiation optical system 136) and the workpiece W.

The positional relationship between the processing head 13 (especially, the irradiation optical system 136) and the workpiece W along at least one of the θX direction, the θY direction, and the θZ direction may be regarded as the postural relationship between the processing head 13 (especially, the irradiation optical system 136) and the workpiece W. Therefore, the stage driving system 16 may be considered to serve as a posture change apparatus that is configured to change the postural relationship between the processing head 13 (especially, the irradiation optical system 136) and the workpiece W. **In** other words, the stage driving system 16 may be considered to serve as a posture change apparatus that is configured to change the posture of the stage 15 relative to the processing head 13 (especially the irradiation optical system 136).

Incidentally, simply changing the positional relationship between the processing head 13 (especially, the irradiation optical system 136) and the workpiece W by the stage driving system 16 moving the stage 15 does not change the positional relationship between the plurality of irradiation areas PA, onto which the plurality of processing lights EL are irradiated on the workpiece W, and the irradiation area MA, onto which the measurement light ML is irradiated. Namely, even in a case where the positional relationship between the processing head 13 (especially, the irradiation optical system 136) and the workpiece W is changed by using the stage driving system 16 to move the stage 15, the positional relationship between the plurality of irradiation areas PA and the irradiation area MA on the workpiece W is maintained. This is because the plurality of processing lights EL and the measurement lights ML are emitted from the same processing head 13.

The control unit 2 controls an operation of the processing unit 1. For example, the control unit 2 may control an operation of the processing head 13 of the processing unit 1. For example, the control unit 2 may control an operation of at least one of the processing optical system 131, the multi-lights generation optical system 132, the measurement optical system 133, the combining optical system 134, the deflection optical system, and the irradiation optical system 136 of the processing head 13. For example, the control unit 2 may control an operation of the head driving system 14 of the processing unit 1 (for example, the movement of the processing head 13). For example, the control unit 2 may control an operation of the stage driving system 16 of the processing unit 1 (for example, the movement of the stage 15).

The control unit 2 may control the operation of the processing unit 1 based on a measured result of the measurement target object M by the processing unit 1. Specifically, the control unit 2 may generate measurement data of the measurement target object M (for example, data related to at least one of the position and the shape of the measurement target object M) based on the measured result of the measurement target object M, and may control the operation of the processing unit 1 based on the generated measurement data. For example, the control unit 2 may generate measurement data of at least a part of the workpiece W (for example, data related to at least one of the position and the shape of at least a part of the workpiece W) based on the measured result of the workpiece W that is one example of the measurement target object M, and may control the operation of the processing unit 1 to process the workpiece W based on the measurement data.

The control unit 2 may include a computing apparatus 21 and the storage apparatus 22, for example. The computing apparatus 21 may include at least one of a CPU (Central Processing Unit) and a GPU (Graphical Processing Unit), for example. The storage apparatus 22 may include a memory, for example. The control unit 2 serves as an apparatus for controlling the operation of the processing unit 1 by means of the computing apparatus 21 executing a computer program. The computer program is a computer program that allows the computing apparatus 21 to execute (namely, to perform) a below-described operation that should be executed by the control unit 2. Namely, the computer program is a computer program that allows the control unit 2 to function so as to make the processing unit 1 perform the below-described operation. The computer program executed by the computing apparatus 21 may be recorded in the storage apparatus 22 (namely, a recording medium) of the control unit 2, or may be recorded in any recording medium (for example, a hard disk or a semiconductor memory) that is built in the control unit 2 or that is attachable to the control unit 2. Alternatively, the computing apparatus 21 may download the computer program that should be executed from an apparatus external to the control unit 2 through a network interface.

The control unit 2 may not be positioned in the processing unit 1. For example, the control unit 2 may be positioned at the outside of the processing unit 1 as a server or the like. In this case, the control unit 2 may be connected to the processing unit 1 through a wired and / or wireless network (alternatively, a data bus and / or a communication line). A network using a serial-bus-type interface such as at least one of IEEE1394, RS-232x, RS-422, RS-423, RS-485, and USB may be used as the wired network. A network using a parallel-bus-type interface may be used as the wired network. A network using an interface that is compatible to Ethernet (a registered trademark) such as at least one of 10-BASE-T, 100BASE-TX or 1000BASE-T may be used as the wired network. A network using an electrical wave may be used as the wireless network. A network that is compatible to IEEE802.1x (for example, at least one of a wireless LAN and Bluetooth (registered trademark)) is one example of the network using the electrical wave. A network using an infrared ray may be used as the wireless network. A network using an optical communication may be used as the wireless network. In this case, the control unit 2 and the processing unit 1 may be configured to transmit and receive various information through the network. Moreover, the control unit 2 may be configured to transmit information such as a command and a control parameter to the processing unit 1 through the network. The processing unit 1 may include a receiving apparatus that receives the information such as the command and the control parameter from the control unit 2 through the network. The processing unit 1 may include a transmitting apparatus that transmits the information such as a command and a control parameter to the control unit 2 (namely, an output apparatus that outputs the information to the control unit 2) through the network. Alternatively, a first control apparatus that performs a part of the processing performed by the control unit 2 may be positioned in the processing unit 1 and a second control apparatus that performs another part of the processing performed by the control unit 2 may be positioned at the outside of the processing unit 1.

An arithmetic model that is buildable by machine learning may be implemented in the control unit 2 by the computing apparatus 21 executing the computer program. One example of the arithmetic model that is buildable by the machine learning is an arithmetic model including a neural network (so-called Artificial Intelligence (AI)), for example. In this case, the learning of the arithmetic model may include learning of parameters of the neural network (for example, at least one of weights and biases). The control unit 2 may control the operation of the processing unit 1 by using the arithmetic model. Namely, the operation for controlling the operation of the processing unit 1 may include an operation for controlling the operation of the processing unit 1 by using the arithmetic model. Note that the arithmetic model that has been built by off-line machine learning using training data may be implemented in the control unit 2. Moreover, the arithmetic model implemented in the control unit 2 may be updated by online machine learning on the control unit 2. Alternatively, the control unit 2 may control the operation of the processing unit 1 by using the arithmetic model implemented in an apparatus external to the control unit 2 (namely, an apparatus external to the processing unit 1), in addition to or instead of the arithmetic model implemented on the control unit 2.

Note that the recording medium recording therein the computer program that should be executed by the control unit 2 may include an optical disc such as a CD-ROM, a CD-R, a CD-RW, a flexible disc, a MO, a DVD-ROM, a DVD-RAM, a DVD-R, a DVD+R, a DVD-RW, a DVD+RW and a Blu-ray (registered trademark), a magnetic disc such as a magnetic tape, an optical-magnetic disc, a semiconductor memory such as a USB memory, and another medium that is configured to store the program. The recording medium may include a device that is configured to record the computer program (for example, a device for a universal use or a device for an exclusive use in which the computer program is embedded to be executable in a form of at least one of a software, a firmware, and the like). Moreover, each process or function included in the computer program may be realized by a logical process block that is realized in the control unit 2 by means of the control unit 2 (namely, a computer) executing the computer program, may be realized by a hardware such as a predetermined gate array (a FPGA, an ASIC) of the control unit 2, or may be realized in a form in which the logical process block and a partial hardware module that realizes an partial element of the hardware are combined.

### (1-2) Configuration of Processing Head 13

Next, with reference to FIG. 3, one example of a configuration of the processing head 13 will be described. FIG. 3 is a cross-sectional view that illustrates one example of the configuration of the processing head 13.

As illustrated in FIG. 3, the light source light SL generated by the processing light source 11 enters the processing head 13 through a light transmitting member 111 such as an optical fiber and the like. However, the light source light SL may enter the processing head 13 by a spatial transmission using a mirror. The processing light source 11 may be positioned at the outside of the processing head 13. The processing light source 11 may be positioned in the processing head 13. Incidentally, the processing light EL may enter the processing head 13 without passing through the light transmitting member 111 such as the optical fiber.

The processing head 13 includes the processing optical system 131, the multi-lights generation optical system 132,the measurement optical system 133, the combining optical system 134, the deflection optical system 135, and the irradiation optical system 136 as described above.

The processing optical system 131 is an optical system to which the light source light SL emitted from the processing light source 11 enters. The processing optical system 131 is an optical system that emits, toward the multi-lights generation optical system 132, the light source light SL that has entered the processing optical system 131.

The processing optical system 131 may include a position adjustment optical system 1311, an angle adjustment optical system 1312, and a Galvano mirror 1313, for example. However, the processing optical system 131 may not include at least one of the position adjustment optical system 1311, the angle adjustment optical system 1312, and the Galvano mirror 1313, for example.

The position adjustment optical system 1311 is configured to adjust an emitting position of the light source light SL from the processing optical system 131. The position adjustment optical system 1311 may include a parallel plate that is configured to incline with respect to a propagating direction of the light source light SL, for example, and change the emitting position of the light source light SL by changing an inclined angle of the parallel plate.

The angle adjustment optical system 1312 is configured to adjust an emitting angle (namely, an emitting direction) of the light source light SL from the processing optical system 131. The angle adjustment optical system 1312 may include a mirror that is configured to incline with respect to the propagating direction of the light source light SL, for example, and change the emitting angle of the light source light SL by changing an inclined angle of the mirror.

The Galvano mirror 1313 is a deflection optical system that deflects the light source light SL (namely, changes the emitting angle of the light source light SL). The Galvano mirror 1313 moves the plurality of processing lights EL, which are generated from the light source light SL and propagate from the irradiation optical system 136toward the workpiece W, by deflecting the light source light SL. Especially, the Galvano mirror 1313 moves the plurality of processing lights EL, which propagate from the irradiation optical system 136 toward the workpiece W, in a direction intersecting an optical axis 136EX of the irradiation optical system 136 by deflecting the light source light SL. As a result, the plurality of irradiation areas PA, onto which the plurality of processing lights EL are irradiated on the surface of the workpiece W, move in a direction along the surface of the workpiece W. Namely, the plurality of irradiation areas PA, onto which the plurality of processing lights EL are irradiated, move along at least one of the X-axis direction and the Y-axis direction.

The Galvano mirror 1313 includes a X scanning mirror 1313X and a Y scanning mirror 1313Y. Each of the X scanning mirror 1313X and the Y scanning mirror 1313Y includes a deflection surface into which the light source light SL enters. The deflection surface may serve as a reflective surface that deflects the light source light SL by reflecting the light source light SL. In the example illustrated in FIG. 3, the light source light SL that has entered the Galvano mirror 1313 enters the deflection surface of the X scanning mirror 1313X, and the light source light SL that has been reflected by the deflection surface of the X scanning mirror 1313X enters the deflection surface of the Y scanning mirror 1313Y. However, the light source light SL that has entered the Galvano mirror 1313 may enter the deflection surface of the Y scanning mirror 1313Y, and the light source light SL that has been reflected by the deflection surface of the Y scanning mirror 1313Y may enter the deflection surface of the X scanning mirror 1313X. Incidentally, the deflection member is not limited to the Galvano mirror 1313, and at least one of a polygon mirror and a resonant mirror may be used as the deflection member.

Each of the X scanning mirror 1313X and the Y scanning mirror 1313Y is an inclined angle variable mirror whose angle relative to an optical path of the light source light SL entering the Galvano mirror 1313 is changeable. The X scanning mirror 1313X deflects the light source light SL so that the plurality of irradiation areas PA, onto which the plurality of processing lights EL are irradiated on the workpiece W, move along the X-axis direction. Specifically, the X scanning mirror 1313X deflects the light source light SL so as to change deflected angles of the plurality of processing lights EL by changing an angle of the deflection surface of the X scanning mirror 1313X around a first axis. As a result, the plurality of irradiation areas PA move along the X-axis direction due to the change of the angle of the deflection surface of the X scanning mirror 1313X. The Y scanning mirror 1313Y deflects the light source light SL so that the plurality of irradiation areas PA, onto which the plurality of processing lights EL are irradiated on the workpiece W, move along the Y-axis direction. Specifically, the X scanning mirror 1313X deflects the light source light SL so as to change the deflected angles of the plurality of processing lights EL by changing an angle of the deflection surface of the Y scanning mirror 1313Y around a second axis that intersects or that is skew relative to the first axis. As a result, the plurality of irradiation areas PA move along the Y-axis due to the change of the angle of the deflection surface of the Y scanning mirror 1313Y.

The light source light SL that has been emitted from the processing optical system 131 (in this case, the light source light SL that has been emitted from the Galvano mirror 1313) enters the multi-lights generation optical system 132. The multi-lights generation optical system 132 is an optical system for generating the plurality of processing lights EL from the light source light SL. In the present example embodiment, the multi-lights generation optical system 132 divides the light source light SL to generate the plurality of processing lights EL. Therefore, the multi-lights generation optical system 132 may also be referred to as a dividing optical system.

The multi-lights generation optical system 132 is an optical system that emits the plurality of processing lights EL generated by the multi-lights generation optical system 132 toward the combining optical system 134. The multi-lights generation optical system 132 is an optical system that emits the plurality of processing lights EL generated by the multi-lights generation optical system 132 toward the deflection optical system 135 through the combining optical system 134. The multi-lights generation optical system 132 is an optical system that emits the plurality of processing lights EL generated by the multi-lights generation optical system 132 toward the irradiation optical system 136 through the combining optical system 134 and the deflection optical system 135. The plurality of processing lights EL generated by the multi-lights generation optical system 132 are irradiated onto the workpiece W through the combining optical system 134, the deflection optical system 135, and the irradiation optical system 136.

The plurality of processing lights EL that has been emitted from the multi-lights generation optical system 132 enter the combining optical system 134. The combining optical system 134 includes a beam splitter (for example, a polarization beam splitter) 1341. The beam splitter 1341 emits, toward the deflection optical system 135, the plurality of processing lights EL that have entered the beam splitter 1341. **In** the example illustrated in FIG. 3, the plurality of processing lights EL that have entered the beam splitter 1341 passes through a polarization split surface to be emitted toward the deflection optical system 135. Therefore, in the example illustrated in FIG. 3, the plurality of processing lights EL enters the polarization split surface of the beam splitter 1341 in a state where the plurality of processing lights EL have a polarized direction that allows the plurality of processing lights EL to pass through the polarization split surface (a polarized direction that allows the plurality of processing lights EL to be p-polarized lights with respect to the polarization split surface).

The plurality of processing lights EL that have been emitted from the combining optical system 134 enter the deflection optical system 135. The deflection optical system 135 emits, toward the irradiation optical system 136, the plurality of processing lights EL that have entered the deflection optical system 135.

The deflection optical system 135 includes a Galvano mirror 1351. The plurality of processing lights EL that have entered the deflection optical system 135 enters the Galvano mirror 1351. Here, in a case where the multi-lights generation optical system 132 generates the plurality of processing lights EL as described above, an entrance direction of one processing light EL of the plurality of processing lights EL entering the Galvano mirror 1351 may be different from an entrance direction of another processing light EL, which is different from the one processing light EL, of the plurality of processing lights EL entering the Galvano mirror 1351. Conversely, the multi-lights generation optical system 132 may generate the plurality of processing lights EL so that the entrance direction of one processing light EL of the plurality of processing lights EL entering the Galvano mirror 1351 is different from the entrance direction of another processing light EL, which is different from the one processing light EL, of the plurality of processing lights EL entering the Galvano mirror 1351.

The Galvano mirror 1351 deflects the plurality of processing lights EL. Incidentally, deflecting the processing light EL may be considered to be equivalent to changing the propagating directions of the processing light EL. Specifically, the Galvano mirror 1351 changes the emitting angles of the plurality of processing lights EL emitted from the Galvano mirror 1351 by deflecting the plurality of processing lights EL. **In** this case, the Galvano mirror 1351 may be considered to move the plurality of processing lights EL that propagate from the Galvano mirror 1351 to the workpiece W through the irradiation optical system 136 by deflecting the plurality of processing lights EL. Especially, the Galvano mirror 1351 may be considered to move the plurality of processing lights EL that propagate from the Galvano mirror 1351 to the workpiece W through the irradiation optical system 136 along a direction intersecting the optical axis 136EX of the irradiation optical system 136 by deflecting the plurality of processing lights EL. Therefore, the Galvano mirror 1351 may be referred to as a beam movement apparatus or a first beam movement apparatus. As a result, the plurality of irradiation areas PA, onto which the plurality of processing lights EL are irradiated on the surface of the workpiece W, move in the direction along the surface of the workpiece W. Namely, the plurality of irradiation areas PA, onto which the plurality of processing lights EL are irradiated, move along at least one of the X-axis direction and the Y-axis direction.

Since the plurality of processing lights EL enter the Galvano mirror 1351, the Galvano mirror 1351 may deflect the plurality of processing lights EL together. Namely, the Galvano mirror 1351 may move the plurality of processing lights EL together. **In** other words, the Galvano mirror 1351 may change the emitting angles of the plurality of processing lights EL together. As a result, the plurality of irradiation areas PA may move on the workpiece W together. Namely, the Galvano mirror 1351 may move the plurality of irradiation areas PA on the workpiece W together.

More specifically, the Galvano mirror 1351 may deflect the plurality of processing lights EL together so that a relative positional relationship between the plurality of processing lights EL propagating from the Galvano mirror 1351 to the workpiece W through the irradiation optical system 136 is maintained. Namely, the Galvano mirror 1351 may deflect the plurality of processing lights EL together so that the relative positional relationship between the plurality of processing lights EL propagating from the Galvano mirror 1351 to the workpiece W through the irradiation optical system 136 does not change. As a result, in a case where the Galvano mirror 1351 deflects the plurality of processing lights EL together, a relative positional relationship between the plurality of irradiation areas PA on the workpiece W may be maintained. Namely, in a case where the Galvano mirror 1351 deflects the plurality of processing lights EL together, the relative positional relationship between the plurality of irradiation areas PA on the workpiece W may not change. Therefore, the plurality of irradiation areas PA may move in the same movement direction by the same movement distance on the workpiece W. In other words, the Galvano mirror 1351 may deflect the plurality of processing lights EL together so that the plurality of irradiation areas PA move in the same movement direction by the same movement distance on the workpiece W. As one example, the Galvano mirror 1351 may deflect the plurality of processing lights EL together so that a movement direction of a first irradiation area PA of the plurality of irradiation areas PA is the same as a movement direction of a second irradiation area PA, which is different from the first irradiation area PA, of the plurality of irradiation areas PA, and a moving distance of the first irradiation area PA is the same as a moving distance of the second irradiation area PA.

The Galvano mirror 1351 includes a X scanning mirror 1351X and a Y scanning mirror 1351Y. Each of the X scanning mirror 1351X and the Y scanning mirror 1351Y includes a deflection surface into which the plurality of processing lights EL enter. The deflection surface may serve as a reflective surface that deflects the plurality of processing lights EL by reflecting the plurality of processing lights EL. In the example illustrated in FIG. 3, the plurality of processing lights EL that have entered the Galvano mirror 1351 enter the deflection surface of the X scanning mirror 1351X, and the plurality of processing lights EL that have been reflected by the deflection surface of the X scanning mirror 1351X enter the deflection surface of the Y scanning mirror 1351Y. However, the plurality of processing lights EL that have entered the Galvano mirror 1351 may enter the deflection surface of the Y scanning mirror 1351Y, and the plurality of processing lights EL that have been reflected by the deflection surface of the Y scanning mirror 1351Y may enter the deflection surface of the X scanning mirror 1351X.

Each of the X scanning mirror 1351X and the Y scanning mirror 1351Y is an inclined angle variable mirror whose angle relative to an optical path of the plurality of processing lights EL entering the Galvano mirror 1351 is changeable. The X scanning mirror 1351X deflects the plurality of processing lights EL so that the plurality of irradiation areas PA, onto which the plurality of processing lights EL are irradiated on the workpiece W, move along the X-axis direction. Specifically, the X scanning mirror 1351X deflects the plurality of processing lights EL so as to change deflected angles of the plurality of processing lights EL by changing an angle of the deflection surface of the X scanning mirror 1351X. As a result, the plurality of irradiation areas PA move along the X-axis direction due to the change of the angle of the deflection surface of the X scanning mirror 1351X. The Y scanning mirror 1351Y deflects the plurality of processing lights EL so that the plurality of irradiation areas PA, onto which the plurality of processing lights EL are irradiated on the workpiece W, move along the Y-axis direction. Specifically, the X scanning mirror 1351X deflects the plurality of processing lights EL so as to change the deflected angles of the plurality of processing lights EL by changing an angle of the deflection surface of the Y scanning mirror 1351Y. As a result, the plurality of irradiation areas PA move along the Y-axis due to the change of the angle of the deflection surface of the Y scanning mirror 1351Y.

The plurality of processing lights EL that have been emitted from the deflection optical system 135 enter the irradiation optical system 136. The irradiation optical system 136 is an optical system that is configured to irradiate the workpiece W with the plurality of processing lights EL. As a result, the irradiation optical system 136 serves as an optical system that is configured to form the plurality of irradiation areas PA, onto which the plurality of processing lights EL are irradiated, on the surface of the workpiece W. In order to irradiate the workpiece W with the plurality of processing lights EL, the irradiation optical system 136 includes an fθ lens 1361. The plurality of processing lights EL that have been emitted from the deflection optical system 135 enter the fθ lens 1361. The fθ lens 1361 irradiates the workpiece W with the plurality of processing lights EL emitted from the deflection optical system 135. Here, in a case where the fθ lens 1361 is a telecentric optical system on the workpiece W side, the propagating directions of the plurality of processing lights EL from the fθ lens 1361 may be parallel to each other, and may be parallel to the optical axis 136EX. Incidentally, the optical axis 136EX of the irradiation optical system 136 may be an optical axis of the fθ lens 1361. Moreover, the fθ lens 1361 may be a non-telecentric optical system on the workpiece W side.

The fθ lens 1361 may condense the plurality of processing lights EL emitted from the Galvano mirror 1351 on the workpiece W. In this case, the fθ lens 1361 may be considered to serve as a condensing optical system.

In a case the fθ lens 1361 condenses the plurality of processing lights EL on the workpiece W, the plurality of processing lights EL that have been emitted from the fθ lens 1361 may be irradiated onto the workpiece W without passing through another optical element (in other words, an optical member, and a lens for example) having a power. In this case, the fθ lens 1361 may be referred to as a terminal optical element or an objective optical system, because it is a last optical element (namely, an optical element that is closest to the workpiece W) having a power of a plurality of optical elements positioned on the optical path of the plurality of processing lights EL. Incidentally, the power of the optical element may be an inverse number of a focal length of the optical element. Moreover, in this case, the plurality of processing lights EL from the Galvano mirror 1351 may be a parallel beam. Here, the propagating directions of the plurality of processing lights EL from the Galvano mirror 1351 may be different from each other. Incidentally, the irradiation optical system 136 may include an objective optical system having a projection characteristic that is different from fθ.

Incidentally, at least one of the X scanning mirror 1351X and the Y scanning mirror 1351Y of the Galvano mirror 1351 and the X scanning mirror 1313X and the Y scanning mirror 1313Y of the Galvano mirror 1313 may be positioned at an entrance pupil position of the fθ lens 1361 as the irradiation optical system and / or a conjugate position thereof. At least one of the X scanning mirror 1351X, the Y scanning mirror 1351Y, the X scanning mirror 1313X, and the Y scanning mirror 1313Y may be positioned at a position that is conjugate with the entrance pupil position of the fθ lens 1361. **In** a case where there are a plurality of scanning mirrors in the Galvano mirrors 1351 and 1313, a relay optical system may be positioned between the scanning mirrors to allow the scanning mirrors to be optically conjugate with each other. Moreover, in this case, the entrance pupil position of the fθ lens 1361 or a position that is optically conjugate with the entrance pupil position may be positioned between the scanning mirrors. Incidentally, the Galvano mirror 1351 may include reflective surfaces that are rotatable (alternatively, tiltable) around two axes that intersect each other, typically orthogonal to each other.

The measurement light ML generated by the measurement light source 12 further enters the processing head 13 through a light transmitting member 121 such as an optical fiber and the like. However, the measurement light ML may enter the processing head 13 by a spatial transmission using a mirror. The measurement light source 12 may be positioned at the outside of the processing head 13. The measurement light source 12 may be positioned in the processing head 13. Incidentally, the processing light EL may enter the processing head 13 without passing through the light transmission member 121 such as the optical fiber. Moreover, the light transmitting member 121 may be a polarization maintaining optical fiber.

The measurement light source 12 may include a light comb light source. The light comb light source is a light source that is configured to generate, as the pulsed light, light including frequency components that are arranged with equal interval on a frequency axis (in the below-described description, it is referred to as a "light frequency comb"). In this case, the measurement light source 12 emits, as the measurement light ML, the pulsed light including the frequency components that are arranged with equal interval on the frequency axis. However, the measurement light source 12 may include a light source that is different from the light comb light source.

In the example illustrated in FIG. 3, the processing system SYS includes a plurality of measurement light sources 12. For example, the processing system SYS may include the measurement light source 12#1 and the measurement light source 12#2. The plurality of measurement light sources 12 may emit a plurality of measurement lights ML whose phases are synchronized with each other and that are coherent, respectively. For example, oscillation frequencies of the plurality of measurement light sources 12 may be different from each other. Therefore, the plurality of measurement lights ML respectively emitted from the plurality of measurement light sources 12 may be the plurality of measurement lights ML having different pulse frequencies (for example, the number of the pulsed light per unit time, and an inverse number of an emission cycle of the pulsed light). However, the processing head 13 may include a single measurement light source 12.

The measurement light ML that has been emitted from the measurement light source 12 enters the measurement optical system 133. The measurement optical system 133 is an optical system that emits the measurement light ML, which has entered the measurement optical system 133, toward the combining optical system. The measurement optical system 133 is an optical system that emits the measurement light ML, which has entered the measurement optical system 133, toward the deflection optical system 135 through the combining optical system 134. The measurement optical system 133 is an optical system that emits the measurement light ML, which has entered the measurement optical system 133, toward the irradiation optical system 136 through the combining optical system 134 and the deflection optical system 135. The measurement light ML emitted by the measurement optical system 133 is irradiated onto the workpiece W through the combining optical system 134, the deflection optical system 135, and the irradiation optical system 136.

The measurement optical system 133 includes a mirror 1330, a beam splitter 1331, a beam splitter 1332, a detector 1333, a beam splitter 1334, a mirror 1335, a detector 1336, a mirror 1337, and a Galvano mirror 1338, for example.

The measurement light ML that has been emitted from the measurement light source 12 enters the beam splitter 1331. Specifically, the measurement light ML that has been emitted from the measurement light source 12#1 (in the below-described description, it is referred to as the "measurement light ML#1") enters the beam splitter 1331. The measurement light ML that has been emitted from the measurement light source 12#2 (in the below-described description, it is referred to as the "measurement light ML#2") enters the beam splitter 1331 through the mirror 1330. The beam splitter 1331 emits, toward the beam splitter 1332, the measurement lights ML#1 and ML#2 that have entered the beam splitter 1331. Namely, the beam splitter 1331 emits, toward the same direction (namely, toward a direction along which the beam splitter 1332 is positioned), the measurement lights ML#1 and ML#2 that have entered the beam splitter 1331 from different directions, respectively.

The beam splitter 1332 reflects, toward the detector 1333, measurement light ML#1-1 that is a part of the measurement light ML#1 that has entered the beam splitter 1332. The beam splitter 1332 emits, toward the beam splitter 1334, measurement light ML#1-2 that is another part of the measurement light ML#1 that has entered the beam splitter 1332. The beam splitter 1332 reflects, toward the detector 1333, measurement light ML#2-1 that is a part of the measurement light ML#2 that has entered the beam splitter 1332. The beam splitter 1332 emits, toward the beam splitter 1334, measurement light ML#2-2 that is another part of the measurement light ML#2 that has entered the beam splitter 1332.

The measurement lights ML#1-1 and ML#2-1 that have been emitted from the beam splitter 1332 enter the detector 1333. The detector 1333 optically receives (namely, detects) the measurement light ML#1-1 and the measurement light ML#2-1. Especially, the detector 1333 optically receives interfering light generated by an interference between the measurement light ML#1-1 and the measurement light ML#2-1. Incidentally, an operation for optically receiving the interfering light generated by the interference between the measurement light ML#1-1 and the measurement light ML#2-1 may be considered to be equivalent to an operation for optically receiving the measurement light ML#1-1 and the measurement light ML#2-1. A detected result by the detector 1333 is output to the control unit 2.

The measurement lights ML#1-2 and ML#2-2 that have been emitted from the beam splitter 1332 enter the beam splitter 1334. The beam splitter 1334 emits, toward the mirror 1335, a part of the measurement light ML#1-2 that has entered the beam splitter 1334. The beam splitter 1334 emits, toward the mirror 1337, a part of the measurement light ML#2-2 that has entered the beam splitter 1334.

The measurement light ML#1-2 that has been emitted from the beam splitter 1334 enters the mirror 1335. The measurement light ML#1-2 that has entered the mirror 1335 is reflected by a reflective surface (the reflective surface may be referred to as a reference surface) of the mirror 1335. Specifically, the mirror 1335 reflects, toward the beam splitter 1334, the measurement light ML#1-2 that has entered the mirror 1335. Namely, the mirror 1335 emits the measurement light ML#1-2, which has entered the mirror 1335, toward the beam splitter 1334 as measurement light ML#1-3 that is a reflection light thereof. In this case, the measurement light ML#1-3 may be referred to as a reference light. The measurement light ML#1-3 that has been emitted from the mirror 1335 enters the beam splitter 1334. The beam splitter 1334 emits, toward the beam splitter 1332, the measurement light ML#1-3 that has entered the beam splitter 1334. The measurement light ML#1-3 that has been emitted from the beam splitter 1334 enters the beam splitter 1332. The beam splitter 1332 emits, toward the detector 1336, the measurement light ML#1-3 that has entered the beam splitter 1332.

On the other hand, the measurement light ML#2-2 that has been emitted from the beam splitter 1334 enters the mirror 1337. The mirror 1337 reflects, toward the Galvano mirror 1338, the measurement light ML#2-2 that has entered the mirror 1337. Namely, the mirror 1337 emits, toward the Galvano mirror 1338, the measurement light ML#2-2 that has entered the mirror 1337.

The Galvano mirror 1338 deflects the measurement light ML#2-2. Incidentally, deflecting the measurement light ML#2-2 may be considered to be equivalent to changing the propagating directions of the measurement light ML#2-2. Specifically, the Galvano mirror 1338 changes the emitting angle of the measurement light ML#2-2 emitted from the Galvano mirror 1338 by deflecting the measurement light ML#2-2. In this case, the Galvano mirror 1338 may be considered to move the measurement light ML#2-2 that propagates from the Galvano mirror 1338 to the workpiece W through the irradiation optical system 136 by deflecting the measurement light ML#2-2. Especially, the Galvano mirror 1338 may be considered to move the measurement light ML#2-2 that propagates from the Galvano mirror 1338 to the workpiece W through the irradiation optical system 136 along a direction intersecting the optical axis 136EX of the irradiation optical system 136 by deflecting the measurement light ML#2-2. As a result, the irradiation area MA, onto which the measurement light ML#2-2 is irradiated on the surface of the workpiece W, move in the direction along the surface of the workpiece W. Namely, the irradiation area MA, onto which the measurement light ML#2-2 is irradiated, moves along at least one of the X-axis direction and the Y-axis direction.

The Galvano mirror 1338 includes a X scanning mirror 1338X and a Y scanning mirror 1338Y. Each of the X scanning mirror 1338X and the Y scanning mirror 1338Y includes a deflection surface into which the measurement light ML#2-2 enters. The deflection surface may serve as a reflective surface that deflects the measurement light ML#2-2 by reflecting the measurement light ML#2-2. In the example illustrated in FIG. 3, the measurement light ML#2-2 that has entered the Galvano mirror 1338 enters the deflection surface of the X scanning mirror 1338X, and the measurement light ML#2-2 that has been reflected by the deflection surface of the X scanning mirror 1338X enters the deflection surface of the Y scanning mirror 1338Y. However, the measurement light ML#2-2 that has entered the Galvano mirror 1338 may enter the deflection surface of the Y scanning mirror 1338Y, and the measurement light ML#2-2 that has been reflected by the deflection surface of the Y scanning mirror 1338Y may enter the deflection surface of the X scanning mirror 1338X.

Each of the X scanning mirror 1338X and the Y scanning mirror 1338Y is an inclined angle variable mirror whose angle relative to an optical path of the measurement light ML#2-2 entering the Galvano mirror 1338 is changeable. The X scanning mirror 1338X deflects the measurement light ML#2-2 so that the irradiation area MA, onto which the measurement light ML#2-2 is irradiated on the workpiece W, moves along the X-axis direction. Specifically, the X scanning mirror 1338X deflects the measurement light ML#2-2 so as to change a deflected angle of the measurement light ML#2-2 by changing an angle of the deflection surface of the X scanning mirror 1338X. As a result, the irradiation area MA moves along the X-axis direction due to the change of the angle of the deflection surface of the X scanning mirror 1338X. The Y scanning mirror 1338Y deflects the measurement light ML#2-2 so that the irradiation area MA, onto which the measurement light ML#2-2 is irradiated on the workpiece W, moves along the Y-axis direction. Specifically, the X scanning mirror 1338X deflects the measurement light ML#2-2 so as to change the deflected angle of the measurement light ML#2-2 by changing an angle of the deflection surface of the Y scanning mirror 1338Y. As a result, the irradiation area MA moves along the Y-axis due to the change of the angle of the deflection surface of the Y scanning mirror 1338Y.

The measurement light ML#2-2 emitted from the measurement optical system 133 (in this case, the measurement light ML#2-2 emitted from the Galvano mirror 1338) enters the combining optical system 134. The beam splitter 1341 of the combining optical system 134 emits, toward the deflection optical system 135, the measurement light ML#2-2 that has entered the beam splitter 1341. In the example illustrated in FIG. 3, the measurement light ML#2-2 that has entered the beam splitter 1341 is reflected by the polarization split surface to be emitted toward the deflection optical system 135. Therefore, in the example illustrated in FIG. 3, the measurement light ML#2-2 enters the polarization split surface of the beam splitter 1341 in a state where the measurement light ML#2-2 has a polarized direction that allows the measurement light ML#2-2 to be reflected by the polarization split surface (a polarized direction that allows the measurement light ML#2-2 to be a s-polarized light with respect to the polarization split surface). Alternatively, the Galvano mirror 1338 may not be used and the measurement light ML#2-2 from the mirror 1337 (alternatively, the beam splitter 1334) may enter the beam splitter 1341 directly.

Here, not only the measurement light ML#2-2 but also the processing lights EL enter the beam splitter 1341 as described above. Namely, both of the measurement light ML#2-2 and the processing lights EL pass through the beam splitter 1341. The beam splitter 1341 emits, toward same direction (namely, toward the same deflection optical system 135), the processing lights EL and the measurement light ML#2-2 that enter the beam splitter 1341 from different directions, respectively. Therefore, the beam splitter 1341 substantially serves as an combining optical member that combines the processing lights EL and the measurement light ML#2-2.

Incidentally, in a case where the wavelength of the processing light EL is different from the wavelength of the measurement light ML#2-2, the combining optical system 134 may include a dichroic mirror as the combining optical member, instead of the beam splitter 1341. Even in this case, the combining optical system 134 may combine the processing lights EL and the measurement light ML#2-2 (namely, combine the optical path of the processing lights EL and the optical path of the measurement light ML#2-2) by using the dichroic mirror.

The measurement light ML#2-2 that has been emitted from the combining optical system 134 enters the deflection optical system 135. The deflection optical system 135 emits, toward the irradiation optical system 136, the measurement light ML#2-2 that has entered the deflection optical system 135.

The measurement light ML#2-2 that has entered the deflection optical system 135 enters the Galvano mirror 1351. The Galvano mirror 1351 deflects the measurement light ML#2-2, as with the case where the plurality of processing lights EL are deflected. Specifically, the Galvano mirror 1351 changes the emitting angle of the measurement light ML emitted from the Galvano mirror 1351 by deflecting the measurement light ML. In this case, the Galvano mirror 1351 may be considered to move the measurement light ML that propagates from the Galvano mirror 1351 to the workpiece W through the irradiation optical system 136 by deflecting the measurement light ML. Especially, the Galvano mirror 1351 may be considered to move the measurement light ML that propagates from the Galvano mirror 1351 to the workpiece W through the irradiation optical system 136 along a direction intersecting the optical axis 136EX of the irradiation optical system 136 by deflecting the measurement light ML. As a result, the irradiation area MA, onto which the measurement light ML is irradiated on the surface of the workpiece W, moves in the direction along the surface of the workpiece W. Namely, the irradiation area MA, onto which the measurement light ML is irradiated, moves along at least one of the X-axis direction and the Y-axis direction.

As described above, not only the measurement light ML#2-2 but also the plurality of processing lights EL enter the Galvano mirror 1351. Namely, the processing lights EL and the measurement light ML#2-2 that have been combined by the combining optical system 134 enter the Galvano mirror 1351. Therefore, both of the plurality of processing lights EL and the measurement light ML#2-2 pass through the same Galvano mirror 1351. Therefore, the Galvano mirror 1351 is configured to change the irradiation areas PA of the plurality of processing lights EL and the irradiation area MA of the measurement light ML#2-2 in synchronization with each other. Namely, the Galvano mirror 1351 may change the irradiation areas PA of the plurality of processing lights EL and the irradiation area MA of the measurement light ML#2-2 in conjunction with each other.

On the other hand, the measurement light ML#2-2 is irradiated onto the workpiece W through the Galvano mirror 1338 and the plurality of processing lights EL are irradiated onto the workpiece W without passing through the Galvano mirror 1338. Therefore, the processing system SYS is configured to independently move the irradiation area MA of the measurement light ML#2-2 relative to the irradiation areas PA of the plurality of processing lights EL by using the Galvano mirror 1338. Namely, the processing system SYS is configured to change a relative positional relationship between the irradiation areas PA of the plurality of processing lights EL and the irradiation area MA of the measurement light ML#2-2 by using the Galvano mirror 1338. Especially, the processing system SYS is configured to change the positional relationship between the irradiation areas PA of the plurality of processing lights EL and the irradiation area MA of the measurement light ML#2-2 along a direction intersecting an irradiation direction of the measurement light ML#2-2 (in the example illustrated in FIG. 3, at least one of the X-axis direction and the Y-axis direction, and a direction intersecting the optical axis 136EX of the irradiation optical system 136) by using the Galvano mirror 1338.

Similarly, the plurality of processing lights EL are irradiated onto the workpiece W through the Galvano mirror 1313 and the measurement light ML#2-2 is irradiated onto the workpiece W without passing through the Galvano mirror 1313. Therefore, the processing system SYS is configured to independently move the irradiation areas PA of the plurality of processing lights EL relative to the irradiation area MA of the measurement light ML#2-2 by using the Galvano mirror 1313. Namely, the processing system SYS is configured to change the relative positional relationship between the irradiation areas PA of the plurality of processing lights EL and the irradiation area MA of the measurement light ML#2-2 by using the Galvano mirror 1313. Especially, the processing system SYS is configured to change the positional relationship between the irradiation areas PA of the plurality of processing lights EL and the irradiation area MA of the measurement light ML#2-2 along a direction intersecting an irradiation direction of the processing light EL (in the example illustrated in FIG. 3, at least one of the X-axis direction and the Y-axis direction, and a direction intersecting the optical axis 136EX of the irradiation optical system 136) by using the Galvano mirror 1313.

The measurement light ML#2-2 that has been emitted from the deflection optical system 135 enters the irradiation optical system 136. The irradiation optical system 136 is an optical system that is configured to irradiate the workpiece W with the measurement light ML#2-2. Specifically, the fθ lens 1361 irradiates the workpiece W with the measurement light ML#2-2 emitted from the deflection optical system 135.

The fθ lens 1361 may condense the measurement light ML#2-2 emitted from the deflection optical system 135 on the workpiece W. In this case, the fθ lens 1361 may be considered to serve as a condensing optical system.

In a case the fθ lens 1361 condenses the measurement light ML on the workpiece W, the measurement light ML that has been emitted from the fθ lens 1361 may be irradiated onto the workpiece W without passing through another optical element (in other words, an optical member, and a lens for example) having a power. In this case, the fθ lens 1361 may be referred to as a terminal optical element or an objective optical system, because it is a last optical element (namely, an optical element that is closest to the workpiece W) having a power of a plurality of optical elements positioned on the optical path of the measurement light ML. In this case, the measurement light ML emitted from the Galvano mirror 1351 to enter the fθ lens 1361 may be a parallel beam. Incidentally, the irradiation optical system 136 may include an objective optical system having a projection characteristic that is different from fθ.

When the workpiece W is irradiated with the measurement light ML#2-2, light due to the irradiation with the measurement light ML#2-2 is generated from the workpiece W. Namely, when the workpiece W is irradiated with the measurement light ML#2-2, the light due to the irradiation with the measurement light ML#2-2 is emitted from the workpiece W. The light due to the irradiation with the measurement light ML#2-2 (in other words, the light emitted from the workpiece W due to the irradiation with the measurement light ML#2-2) may include at least one of the measurement light ML#2-2 reflected by the workpiece W (namely, reflection light), the measurement light ML#2-2 scattered by the workpiece W (namely, scattering light), the measurement light ML#2-2 diffracted by the workpiece W (namely, diffraction light) and the measurement light ML#2-2 transmitted through the workpiece W (namely, transmitted light).

At least a part of the light emitted from the workpiece W due to the irradiation with the measurement light ML #2-2 enters the irradiation optical system 136. In the below-described description, the light that returns to the processing head 13 from the workpiece W that has been irradiated with the measurement light ML#2-2 is referred to as the returned light RL. Specifically, the light, which propagates along the optical path of the measurement light ML #2-2 entering the workpiece W, of the light emitted from the workpiece W due to the irradiation with the measurement light ML #2-2 enters the irradiation optical system 136 as the returned light RL. In this case, the optical path of the measurement light ML #2-2 that is emitted from the irradiation optical system 136 to enter the workpiece W may be the same as the optical path of the returned light RL that is emitted from the workpiece W to enter the irradiation optical system 136. The returned light RL that has entered the irradiation optical system 136 enters the deflection optical system 135 through the fθ lens 1361. The returned light RL that has entered the deflection optical system 135 enters the combining optical system 134 through the Galvano mirror 1351. The beam splitter 1341 of the combining optical system 134 emits, toward the measurement optical system 133, the returned light RL that has entered the beam splitter 1341.

The returned light RL that has been emitted from the beam splitter 1341 enters the Galvano mirror 1338 of the measurement optical system 133. The Galvano mirror 1338 emits, toward the mirror 1337, the returned light RL that has entered the Galvano mirror 1338. The mirror 1337 reflects, toward the beam splitter 1334, the returned light RL that has entered the mirror 1337. The beam splitter 1334 emits, toward the beam splitter 1332, at least a part of the returned light RL that has entered the beam splitter 1334. The beam splitter 1332 emits, toward the detector 1336, at least a part of the returned light RL that has entered the beam splitter 1332.

As described above, not only the returned light RL but also the measurement light ML#1-3 enter the detector 1336. Namely, the returned light RL that propagates toward the detector 1336 through the workpiece W and the measurement light ML#1-3 that propagates toward the detector 1336 without going through the workpiece W enter the detector 1336. The detector 1336 optically receives (namely, detects) the measurement light ML#1-3 and the returned light RL. Especially, the detector 1336 optically receives interfering light generated by an interference between the measurement light ML#1-3 and the returned light RL. Incidentally, an operation for optically receiving the interfering light generated by the interference between the measurement light ML#1-3 and the returned light RL may be considered to be equivalent to an operation for optically receiving the measurement light ML#1-3 and the returned light RL. A detected result by detector 1336 is output to the control unit 2.

The control unit 2 acquires the detected result by the detector 1333 and the detected result by the detector 1336. The control unit 2 may generate the measurement data of the measurement target object M (for example, the measurement data related to at least one of the position and the shape of the measurement target object M) based on the detected result by the detector 1333 and the detected result by the detector 1336.

Specifically, since the pulse frequency of the measurement light ML#1 is different from the pulse frequency of the measurement light ML#2, a pulse frequency of the measurement light ML#1-1 is different from a pulse frequency of the measurement light ML#2-1. Therefore, the interfering light generated by the interference between the measurement light ML#1-1 and the measurement light ML#2-1 is interfering light in which pulsed light appears in synchronization with a timing at which the pulsed light of the measurement light ML#1-1 and the pulsed light of the measurement light ML#2-1 enter the detector 1333 at the same time. Similarly, a pulse frequency of the measurement light ML#1-3 is different from a pulse frequency of the returned light RL. Therefore, the interfering light generated by the interference between the measurement light ML#1-3 and the returned light RL is interfering light in which pulsed light appears in synchronization with a timing at which the pulsed light of the measurement light ML#1-3 and the pulsed light of the returned light RL enter the detector 1336 at the same time. Here, a position (a position along a time axis) of the pulsed light of the interfering light detected by the detector 1336 changes depending on the positional relationship between the processing head 13 and the measurement target object M. This is because the interfering light detected by the detector 1336 is the interfering light generated by the interference between the returned light RL that propagates toward the detector 1336 through the measurement target object M and the measurement light ML#1-3 that propagates toward the detector 1336 without going through the measurement target object M. On the other hand, a position (a position along a time axis) of the pulsed light of the interfering light detected by the detector 1333 does not change depending on the positional relationship between the processing head 13 and the measurement target object M. Therefore, it can be said that a difference in time between the pulsed light of the interfering light detected by the detector 1333 and the pulsed light of the interfering light detected by the detector 1336 indirectly indicates the positional relationship between the processing head 13 and the measurement target object M. Specifically, it can be said that the difference in time between the pulsed light of the interfering light detected by the detector 1333 and the pulsed light of the interfering light detected by the detector 1336 indirectly indicates a distance between the processing head 13 and the measurement target object M in the direction along the optical path of the measurement light ML (namely, a direction along the propagating direction of the measurement light ML). Therefore, the control unit 2 may calculate the distance between the processing head 13 and the measurement target object M in the direction along the optical path of the measurement light ML (for example, the Z-axis direction) based on the difference in time between the pulsed light of the interfering light detected by the detector 1333 and the pulsed light of the interfering light detected by the detector 1336. In other words, the control unit 2 may calculate the position of the measurement target object M in the direction along the optical path of the measurement light ML (for example, the Z-axis direction). More specifically, the control unit 2 may calculate the distance between the processing head 13 and an irradiated part of the measurement target object M that is irradiated with the measurement light ML#2-2. The control unit 2 may calculate the position of the irradiated part in the direction along the optical path of the measurement light ML (for example, the Z-axis direction). Furthermore, since the irradiation position of the measurement light ML #2-2 on the workpiece W is determined by driving states of the Galvano mirrors 1351 and 1338, the control unit 2 may calculate, based on the driving states of the Galvano mirrors 1351 and 1338, the position of the irradiated part in the direction intersecting the optical path of the measurement light ML (for example, at least one of the X-axis direction and the Y-axis direction). As a result, the control unit 2 may generate the measurement data indicating the position (for example, the position in a three-dimensional coordinate space) of the irradiated part in a measurement coordinate system that is based on the processing head 13.

The processing head 13 may irradiate a plurality of parts of the measurement target object M with the measurement light ML #2-2. For example, at least one of the Galvano mirrors 1351 and 1338 may change the irradiation position of the measurement light ML#2-2 on the measurement target object M so that the processing head 13 irradiates the plurality of parts of the measurement target object M with the measurement light ML #2-2. For example, at least one of the processing head 13 and the stage 15 may move so that the processing head 13 irradiates the plurality of parts of the measurement target object M with the measurement light ML #2-2. In a case where the plurality of parts of the measurement target object M are irradiated with the measurement light ML #2-2, the control unit 2 may generate the measurement data indicating the positions of the plurality of parts of the measurement target object M. As a result, the control unit 2 may generate the measurement data indicating the shape of the measurement target object M based on the measurement data indicating the positions of the plurality of parts. For example, the control unit 2 may generate the measurement data indicating the shape of the measurement target object M by calculating, as the shape of the measurement target object M, a three-dimensional shape formed by a virtual planar plane (alternatively, curved plane) connecting the plurality of parts whose positions are calculated.

### (1-3) Configuration of Multi-Lights Generation Optical System 132

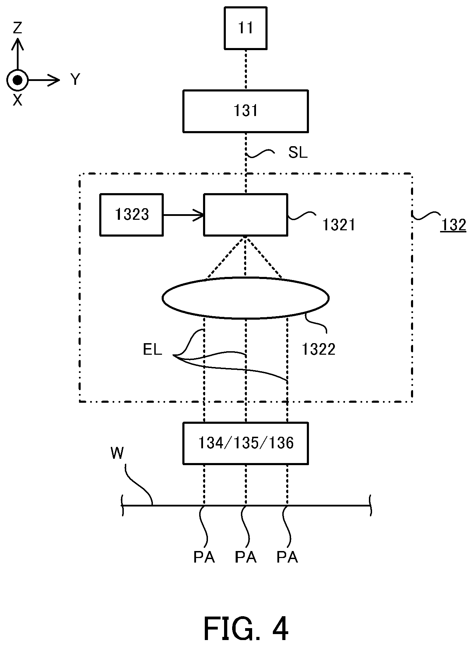

Next, a configuration of the multi-lights generation optical system 132, which divides the light source light SL to generate the plurality of processing lights EL, will be described. In order to divide the light source light SL to generate the plurality of processing lights EL, the multi-lights generation optical system 132 includes a diffractive optical element (DOE: Diffractive Optical Element) 1321 and a lens 1322, as illustrated in FIG. 4 that is a cross-sectional view illustrating the configuration of the multi-lights generation optical system 132.

The light source light SL that has been emitted from the processing optical system 131 enters the diffractive optical element 1321. The diffractive optical element 1321 divides the light source light SL, which has entered the diffractive optical element 1321, into diffracted light having each order at a diffractive surface thereof. For example, the diffractive optical element 1321 may divide the light source light SL, which has entered the diffractive optical element 1321, into zeroth-order diffracted light, +1st-order diffracted light, and **-1st-order** diffracted light. Incidentally, FIG. 4 illustrates an example in which the diffractive optical element 1321 is a transmission-type diffractive optical element, but the diffractive optical element 1321 may be a reflection-type diffractive optical element.

At least two of the plurality of diffracted lights generated by dividing the light source light SL are used as the plurality of processing lights EL. For example, the zeroth-order diffracted light, the +1st-order diffracted light, and the **-1st-order** diffracted light generated by dividing the light source light SL may be used as the plurality of processing lights EL (in this case, three processing lights EL). **In** this manner, the diffractive optical element 1321 generates at least two of the plurality of diffracted lights as the plurality of processing lights EL by dividing the light source light SL. Therefore, the diffractive optical element 1321 may be considered to serve as a beam generation apparatus that is configured to generate the plurality of processing lights EL. Furthermore, the diffractive optical element 1321 is not limited to the diffractive optical element that uses the zeroth-order and ±1st-order diffracted lights, and may be a diffractive optical element that uses the diffracted light having an order higher than ±1st-order. A diffractive optical element disclosed in US5,850,300 may be used as the diffractive optical element, for example. The diffractive optical element 1321 is not limited to the diffractive optical element that divides the entering light into three lights.

The plurality of processing lights EL generated by the diffractive optical element 1321 are emitted from the multi-lights generation optical system 132 through the lens 1322. The plurality of processing lights EL emitted from the multi-lights generation optical system 132 are irradiated onto the workpiece W through the combining optical system 134, the deflection optical system 135, and the irradiation optical system 136, as described above. As a result, the plurality of irradiation areas PA, onto which the plurality of processing lights EL are irradiated, are formed on the workpiece W. As a result, the object is processed by the plurality of processing lights EL. As described above, the processing unit 1 processes the workpiece W by irradiating the workpiece W with the plurality of processing lights EL to form the plurality of irradiation areas PA on the surface of the workpiece W.

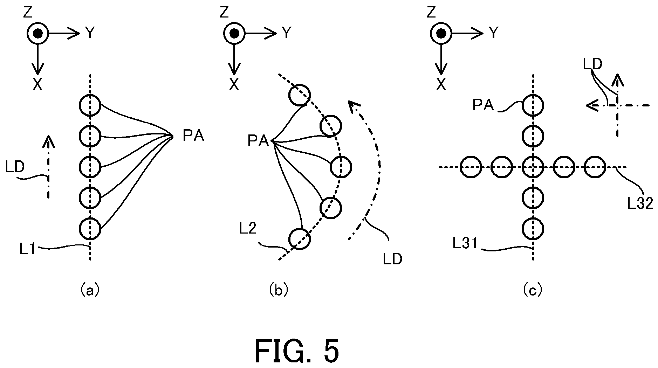

The processing unit 1 may form the plurality of irradiation areas EA on the surface of the workpiece W so that the plurality of irradiation areas PA are arranged in a predetermined pattern on the surface of the workpiece W. Namely, the processing unit 1 may irradiate the workpiece W with the plurality of processing lights EL so that the plurality of irradiation areas PA are arranged on the surface of the workpiece W. As an example, as illustrated in FIG. 5(a), the processing unit 1 may irradiate the workpiece W with the plurality of processing lights EL so that the plurality of irradiation areas PA are arranged in a one-dimensional arrangement pattern on the surface of the workpiece W. FIG. 5(a) illustrates an example in which the plurality of irradiation areas PA are aligned along a desired straight line L1 on the surface of the workpiece W. As another example, as illustrated in FIG. 5(b) and FIG. 5(c), the processing unit 1 may irradiate the workpiece W with the plurality of processing lights EL so that the plurality of irradiation areas PA are arranged in a two-dimensional arrangement pattern on the surface of the workpiece W. FIG. 5(b) illustrates an example in which the plurality of irradiation areas PA are arranged along a desired curved line L2 on the surface of the workpiece W. FIG. 5(c) illustrates an example in which the plurality of irradiation areas PA include at least two irradiation areas PA that are arranged along a desired first straight line L31 on the surface of the workpiece W, and at least two irradiation areas PA that are arranged along a desired second straight line L32 that intersects the first straight line L31 on the surface of the workpiece W.

Incidentally, the plurality of irradiation areas PA may be arranged along a plurality of straight lines or a plurality of curved lines on the surface of the workpiece W. In this case, the plurality of straight lines or the plurality of curved lines on which the plurality of irradiation areas PA are positioned may be parallel to each other. Moreover, in a case where the plurality of irradiation areas PA are arranged along the plurality of straight lines or the plurality of curved lines on the surface of the workpiece W, the plurality of irradiation areas PA on different straight lines or different curved lines may be at different positions along a direction in which the plurality of straight lines or the plurality of curved line extend. For example, the plurality of irradiation areas PA may be arranged in a staggered pattern on the surface of the workpiece W.

The processing unit 1 may form the plurality of irradiation areas PA on the surface of the workpiece W so that the plurality of irradiation areas PA are arranged in a regular arrangement pattern on the surface of the workpiece W. Each of FIG. 5(a) to FIG. 5(c) may be considered to illustrates an example in which the plurality of irradiation areas PA are arranged in the regular arrangement pattern. Alternatively, the processing unit 1 may form the plurality of irradiation areas PA on the surface of the workpiece W so that the plurality of irradiation areas PA are not arranged in a regular pattern on the surface of the workpiece W. For example, the processing unit 1 may form the plurality of irradiation areas PA at a plurality of random positions on the surface of the workpiece W.

Furthermore, as illustrated in FIG. 5(a) to FIG. 5(c), the processing unit 1 may form the plurality of irradiation areas PA on the surface of the workpiece W so that the plurality of irradiation areas PA do not overlap each other on the surface of the workpiece W. The processing unit 1 may form the plurality of irradiation areas PA on the surface of the workpiece W so that the plurality of irradiation areas PA are separated from each other in a direction along the surface of the workpiece W. In this case, the processing unit 1 may irradiate the workpiece W with the plurality of processing lights EL that are spatially separated from each other in the direction along the surface of the workpiece W. Since the surface of the workpiece W intersects the propagating direction of at least one of the plurality of processing lights EL (see FIG. 4), the processing unit 1 may irradiate the workpiece W with the plurality of processing lights EL that are spatially separated from each other in a direction intersecting the propagating direction of at least one of the plurality of processing lights EL (for example, a direction intersecting the Z-axis). Since the surface of the workpiece W intersects the optical axis 136EX of the irradiation optical system 136 (see FIG. 3), the processing unit 1 may irradiate the workpiece W with the plurality of processing lights EL that are spatially separated from each other in a direction intersecting the optical axis 136EX of the irradiation optical system 136 (for example, a direction intersecting the Z-axis).

However, the processing unit 1 may form the plurality of irradiation areas PA on the surface of the workpiece W so that at least two of the plurality of irradiation areas PA overlap at least partially. In a case where this is the case, the processing unit 1 may irradiate the workpiece W with the plurality of processing lights EL including at least two processing lights EL whose light paths spatially overlap at least partially in a direction along the surface of the workpiece W.

In the present example embodiment, the processing unit 1 may be configured to change an arrangement direction LD of the plurality of irradiation areas PA. In the present example embodiment, the arrangement direction LD of the plurality of irradiation areas PA may mean a direction along which the plurality of irradiation areas PA are arranged on the surface of the workpiece W. For example, in a case where the plurality of irradiation areas PA are arranged as illustrated in FIG. 5(a), the arrangement direction LD of the plurality of irradiation areas PA may mean a direction along which the straight line L1, along which the plurality of irradiation areas PA are arranged, extends. For example, in a case where the plurality of irradiation areas PA are arranged as illustrated in FIG. 5(b), the arrangement direction LD of the plurality of irradiation areas PA may mean a direction along which the curved line L2, along which the plurality of irradiation areas PA are arranged, extends. For example, in a case where the plurality of irradiation areas PA are arranged as illustrated in FIG. 5(c), the arrangement direction LD of the plurality of irradiation areas PA may mean a direction along which at least one of the first straight line L31 and the second straight line L32, along which at least two of the plurality of irradiation areas PA are arranged, extends.

Incidentally, in a case where the plurality of irradiation areas PA are arranged along the plurality of straight lines or the plurality of curved lines that are parallel or almost parallel to each other on the surface of workpiece W, the arrangement direction LD of the plurality of irradiation areas PA may mean a direction along which one straight line or one curved line of the plurality of straight lines or the plurality of curved lines extends, or may mean a direction obtained by averaging the directions along which the plurality of straight lines or the plurality of curved lines extend.

The processing unit 1 may change the arrangement direction LD of the plurality of irradiation areas PA by moving at least one of the plurality of processing lights EL propagating from the processing unit 1 toward the workpiece W under the control of the control unit 2. In other words, the control unit 2 may control the processing Unit 1 so as to change the arrangement direction LD of the plurality of irradiation areas PA by moving at least one of the plurality of processing lights EL propagating from the processing unit 1 toward the workpiece W.

When at least one of the plurality of processing lights EL propagating from the processing unit 1 toward the workpiece W moves, at least one of the plurality of irradiation areas PA moves on the surface of the workpiece W. Therefore, the processing unit 1 may change the arrangement direction LD of the plurality of irradiation areas PA by moving at least one of the plurality of irradiation areas PA. In other words, the control unit 2 may control the processing unit 1 so as to change the arrangement direction LD of the plurality of irradiation areas PA by moving at least one of the plurality of irradiation areas PA.

The processing unit 1 may change (in other words, control) the arrangement direction LD of the plurality of irradiation areas PA by using the multi-lights generation optical system 132. Especially, the processing unit 1 may change the arrangement direction LD of the plurality of irradiation areas PA by using the diffractive optical element 1321 of the multi-lights generation optical system 132.

In order to change the arrangement direction LD of the plurality of irradiation areas PA by using the diffractive optical element 1321, the multi-lights generation optical system 132 may include an actuator 1323, as illustrated in FIG. 4. The actuator 1323 is a driving system that is configured to move, typically rotationally move the diffractive optical element 1321. The multi-lights generation optical system 132 may change the arrangement direction LD of the plurality of irradiation areas PA by using the actuator 1323 to move the diffractive optical element 1321 under the control of the control unit 2. In this case, the actuator 1323 may be considered to serve as a beam movement apparatus (a second beam movement apparatus) that changes the arrangement direction LD of the plurality of irradiation areas PA.

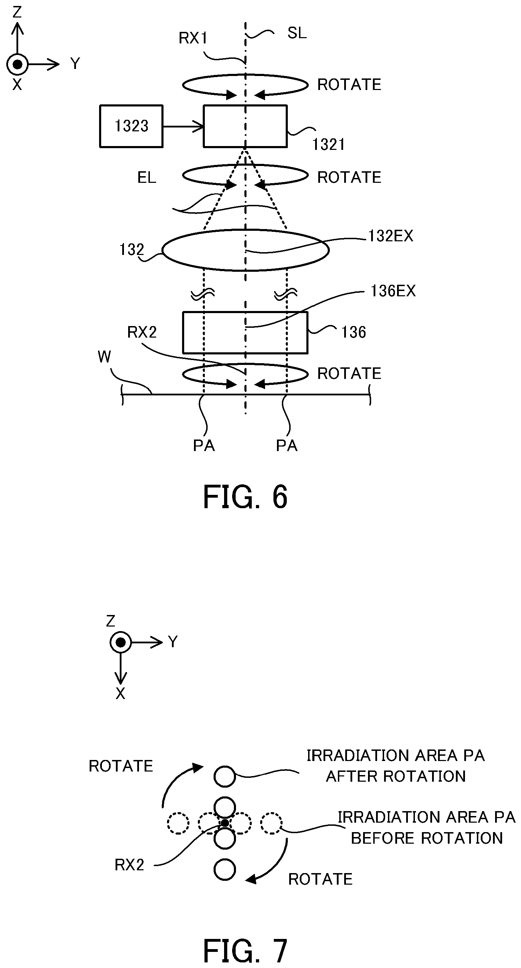

Specifically, as illustrated in FIG. 6 that is a cross-sectional view illustrating the diffractive optical element 1321 moved by the actuator 1323, the multi-lights generation optical system 132 may change the arrangement direction LD of the plurality of irradiation areas PA by using the actuator 1323 to rotate (namely, rotationally move) the diffractive optical element 1321 around a desired rotational axis RX1 under the control of the control unit 2. Incidentally, in a case where the actuator 1323 rotates the diffractive optical element 1321, the actuator 1323 may be referred to as a rotation apparatus.

An optical axis 132EX of the multi-lights generation optical system 132 or an axis parallel to the optical axis 132EX may be used as the rotational axis RX1. The optical axis 132EX of the multi-lights generation optical system 132 may be an optical axis of the lens 1322 of the multi-lights generation optical system 132. The optical axis 132EX of the multi-lights generation optical system 132 may be an optical axis of the diffractive optical element 1321 of the multi-lights generation optical system 132. Incidentally, the optical axis of the diffractive optical element 1331 may be an axis that is perpendicular to the diffractive surface of the diffractive optical element 1331. In this case, when the diffractive optical element 1321 rotates around the rotational axis RX1, the plurality of processing lights EL emitted from the diffractive optical element 1321 also rotate around the rotational axis RX1. Namely, the rotation of the diffractive optical element 1321 around the rotational axis RX1 changes an emitting direction (an emitting orientation) of the plurality of processing lights EL emitted from the diffractive optical element 1321 around the rotational axis RX1. In this case, the plurality of processing lights EL emitted from the irradiation optical system 136 also rotate around a rotational axis RX2 that is the optical axis 136EX of the irradiation optical system 136 or an axis parallel to the optical axis 136EX. As a result, as illustrated in FIG. 7 that is a plan view illustrating the plurality of irradiation areas PA on the workpiece W, the plurality of irradiation areas PA also rotate around the rotational axis RX2 that intersects the surface of the workpiece W. As a result, as illustrated in FIG. 7, the arrangement direction LD of the plurality of irradiation areas PA changes due to the rotation of the plurality of irradiation areas PA around the rotational axis RX2. For example, in the example illustrated in FIG. 7, the arrangement direction LD of the plurality of irradiation areas PA changes from the Y-axis direction to the X-axis direction due to the rotational of the plurality of irradiation areas PA around the rotational axis RX2.

Incidentally, a method for rotating the diffractive optical element 1321 around the rotational axis RX1 by using the actuator 1323 is one example of each of a method for rotating the plurality of processing lights EL around the rotational axis RX1 (furthermore, around the rotational axis RX2) and a method for changing the arrangement direction LD of the plurality of irradiation areas PA. Therefore, the processing unit 1 may rotate the plurality of processing lights EL around the rotational axis RX1 (furthermore, around the rotational axis RX2) by using any method that is different from the method for rotating the diffractive optical element 1321 around the rotational axis RX1 by using the actuator 1323. The processing unit 1 may change the arrangement direction LD of the plurality of irradiation areas PA by using any method that is different from the method for rotating the diffractive optical element 1321 around the rotational axis RX1 by using the actuator 1323. For example, an image rotator may be positioned on the optical path on the workpiece W side from the diffractive optical element 1321, and the image rotator may be rotated by using the actuator. In this case, the diffractive optical element 1321 may also be rotated.

Moreover, an operation for changing the arrangement direction LD of the plurality of irradiation areas PA by rotating the plurality of irradiation areas PA around the rotational axis RX2 may be considered to be substantially equivalent to an operation for moving the plurality of irradiation areas PA. This is because the plurality of irradiation areas PA rotationally move. An apparatus that includes: the Galvano mirror 1351 configured to move the plurality of irradiation areas PA along each of the X-axis direction and the Y-axis direction; and the actuator 1323 configured to rotate the plurality of irradiation areas PA around the rotational axis RX2 may be considered to serve as a beam position change apparatus that changes the propagating directions of the plurality of processing lights EL entering the irradiation optical system 136 to independently move the plurality of irradiation areas PA formed on the surface of the workpiece W, respectively. For the same reason, an apparatus that includes: the Galvano mirror 1313 configured to move the plurality of irradiation areas PA along the X-axis direction and the Y-axis direction; and the actuator 1323 configured to rotate the plurality of irradiation areas PA around the rotational axis RX2 may be considered to serve as a beam position change apparatus that changes the propagating directions of the plurality of processing lights EL entering the irradiation optical system 136 to independently move the plurality of irradiation areas PA formed on the surface of the workpiece W, respectively

### (2) Operation of Processing System SYS

Next, an operation performed by the processing system SYS will be described.

### (2-1) Processing Operation for Processing Workpiece W

As described above, the processing system SYS is configured to process the workpiece W by irradiating the workpiece W with the plurality of processing lights EL. Namely, the processing system SYS may perform a processing operation for processing the workpiece W by using the plurality of processing lights EL.

The processing unit 1 may perform a subtractive manufacturing on the workpiece W. Namely, the processing unit 1 may perform the subtractive manufacturing for removing a part of the workpiece W. In the present example embodiment, the processing unit 1 may perform the subtractive manufacturing by using a principle of a non-thermal processing (for example, an ablation processing). Namely, the processing unit 1 may perform the non-thermal processing (for example, the ablation processing) on the workpiece W. In order to perform the non-thermal processing, the processing unit 1 may use, as the light source light SL (and the processing light EL), light whose photon density (in other words, fluence) is high. As one example, the processing unit 1 may use, as the light source light SL (and the processing light EL), light including the pulsed light an ON time of which is equal to or shorter than nano-seconds, is equal to or shorter than pico-seconds or is equal to or shorter than femto-seconds. Namely, the processing unit 1 may use, as the light source light SL (and the processing light EL), light including the pulsed light whose pulse width is equal to or shorter than nano-seconds, is equal to or shorter than pico-seconds or is equal to or shorter than femto-seconds. In this case, a material constituting an energy-transferred part of the workpiece W, to which an energy of the processing light EL is transferred, instantly evaporates and spatters. Namely, the material constituting the energy-transferred part of the workpiece W evaporates and spatters within a time sufficiently shorter than a thermal diffusion time of the workpiece W. The material constituting the energy-transferred part of the workpiece W may be sublimated without being in a molten state. In this case, the material constituting the energy-transferred part of the workpiece W may be released from the workpiece W as at least one of ion, atom, radical, molecule, cluster, and solid piece. However, the processing unit 1 may perform the subtractive manufacturing by using a principle of a thermal processing.

The processing unit 1 may perform the additive manufacturing on the workpiece W. Namely, the processing unit 1 may perform the additive manufacturing for building a build object on the workpiece W. In this case, the processing unit 1 may be considered to be configured to serve as a 3D printer. Incidentally, as a method for performing the additive manufacturing, a Powder Bed Fusion method may be used, a Laser Metal Deposition (LMD) or a Directed Energy Deposition (DED) may be used. In a case where the Powder Bed Fusion is used, the workpiece W may be a build plate or a powder layer.

The processing unit 1 may perform a melting processing for melting a surface of the workpiece W and solidifying the molten surface. Incidentally, the melting processing may be referred to as a remelt processing. The processing unit 1 may perform a planar processing for making the surface of the workpiece be closer to a flat surface than that before the melting processing is performed, by performing the melting processing. In the present example embodiment, the processing unit 1 may perform the melting processing by using a principle of the thermal processing. Namely, the processing unit 1 may perform the thermal processing on the workpiece W. In order to perform the thermal processing, the processing unit 1 may use, as the light source light SL (and the processing light EL), light including the pulsed light that is equal to or longer than milli-seconds, or is equal to or longer than nano-seconds. In order to perform the thermal processing, the processing unit 1 may use the continuous light as the light source light SL (and the processing light EL).

The processing unit 1 may perform a marking processing for forming a desired mark on a surface of the workpiece W. The processing unit 1 may perform a surface characteristic changing processing for changing a characteristic of the surface of the workpiece W. The processing unit 1 may perform a peening processing for changing a characteristic of the surface of the workpiece W. The processing unit 1 may perform a peeling processing for peeling the surface of the workpiece W. The processing unit 1 may perform a welding processing for coupling one workpiece W with another the workpiece W. The processing unit 1 may perform a cutting processing for cutting the workpiece W.

The processing unit 1 may form a desired structure on the surface of the workpiece W by processing the workpiece W. However, the processing unit 1 may perform a processing that is different from a processing for forming the desired structure on the surface of the workpiece W. A planar shaping processing is one example of the processing that is different from the processing for forming the desired structure on the surface of the workpiece W. The planar shaping processing may include a processing for grinding the surface of the workpiece W to make it planar.

A riblet structure RB is one example of the desired structure. The riblet structure RB may include a structure (typically, a concave and convex structure) by which a resistance (especially at least one of a frictional resistance and a turbulent frictional resistance) of the surface of the workpiece W to a fluid is reducible. Therefore, the riblet structure RB may be formed on the workpiece W that is disposed (in other words, positioned) in the fluid. The riblet structure RB may be formed on the workpiece W that includes a member disposed (in other words, positioned) in the fluid. In other words, the riblet structure RB may be formed on the workpiece W that is used in a target including a surface that is in contact with the fluid. In other words, the riblet structure RB may be formed on the workpiece W including the member that is used in an aspect where its surface is in contact with the fluid.

Incidentally, the fluid here means any medium (for example, at least one of gas and liquid) that flows relative to the surface of the workpiece W. For example, in a case where the surface of workpiece W moves relative to the medium although the medium itself is static, this medium may be referred to as the fluid. Note that a state where the medium is static may mean a state where the medium does not move relative to a predetermined reference object (for example, a ground surface).

In a case where the riblet structure RB, which includes the structure by which the resistance (especially at least one of the frictional resistance and the turbulent frictional resistance) of the surface of the workpiece W to the fluid is reducible, is formed on the workpiece W, the workpiece W is movable relative to the fluid more easily. Therefore, the resistance that prevents the workpiece W from moving relative to the fluid is reduced, and thereby an energy saving is achievable. Namely, it is possible to manufacture the environmentally preferable workpiece W.

At least one of an airplane, a car, a bike, a windmill, a turbine for an engine, and a turbine for a power generation is one example of the workpiece W on which the riblet structure RB is formed. For example, in a case where the workpiece W is a member exposed on a surface of the airplane (for example, at least a part of the airplane), the resistance that prevents the airplane from moving is reduced, and thereby a fuel saving of the airplane is achievable. For example, in a case where the workpiece W is a member that forms an exterior of the car (for example, at least a part of the car), the resistance that prevents the car from moving is reduced, and thereby a fuel saving of the car is achievable. For example, in a case where the workpiece W is a member that forms an exterior (for example, a cowl) of the bike (for example, at least a part of the car), the resistance that prevents the bike from moving is reduced, and thereby a fuel saving of the bike is achievable. For example, in a case where the workpiece W is the windmill (for example, at least a part of the windmill), the resistance that prevents the windmill from moving (typically, rotating) is reduced, and thereby a high efficiency of the windmill is achievable. For example, in a case where the workpiece W is the turbine for the engine (for example, at least a part of the turbine for the engine), the resistance that prevents the turbine for the engine from moving (typically, rotating) is reduced, and thereby a high efficiency or energy saving of the turbine for the engine is achievable. For example, in a case where the workpiece W is the turbine for the power generation (for example, at least a part of the turbine for the power generation), the resistance that prevents the turbine for the power generation from moving (typically, rotating) is reduced, and thereby a high efficiency of the turbine for the power generation (namely, an improvement of a power generation efficiency) is achievable. Therefore, there is a possibility that the processing unit 1 can contribute "13-2-2 Total Greenhous gas emission per year" in indicators included in Goal 13 (Take urgent action to combat climate change and its impact) of Sustainable Development Goals (SDGs) initiated by United Nations.

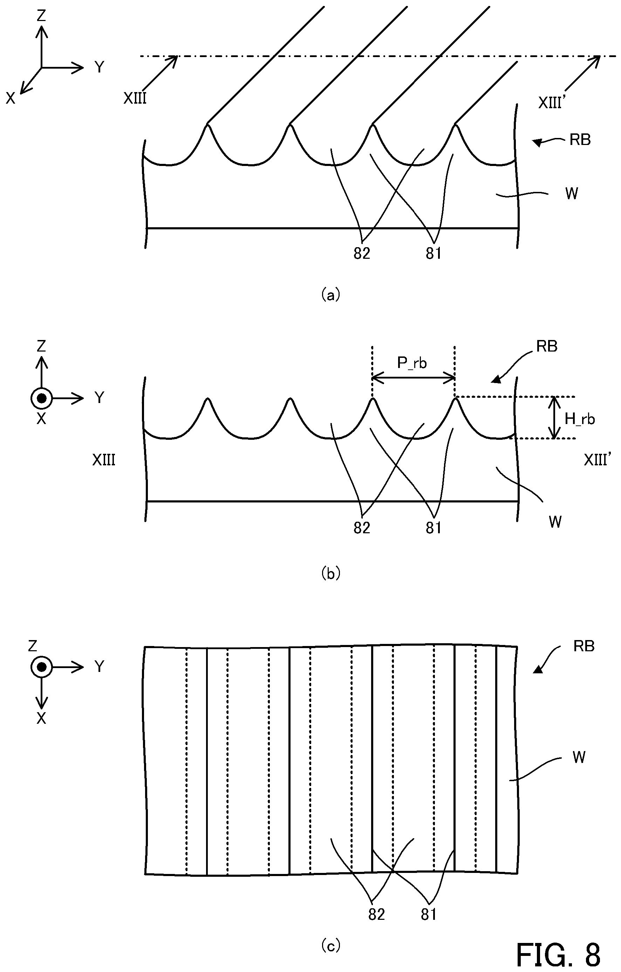

Here, with reference to FIG. 8(a) and FIG. 8(b), the riblet structure RB will be described. FIG. 8(a) is a perspective view that illustrates the riblet structure RB, FIG. 8(b) is a cross-sectional view (XIII-XIII' cross-sectional view in FIG. 8(a)) that illustrates the riblet structure RB, and FIG. 8(c) is a top view that illustrates the riblet structure RB.

As illustrated in FIG. 8(a) to FIG. 8(c), the riblet structure RB may include a structure in which a plurality of convex structures 81, each of which extends along a first direction that is along the surface of the workpiece W, are arranged along a second direction that is along the surface of the workpiece W and that intersects the first direction. Namely, the riblet structure RB may include a structure in which the plurality of convex structures 81, each of which is formed to extend along the first direction, are arranged along the second direction. In an example illustrated in FIG. 8(a) to FIG. 8(c), the riblet structure RB includes a structure in which the plurality of convex structures 81, each of which extends along the X-axis direction, are arranged along the Y-axis direction.

The convex structure 81 is a structure that protrudes along a direction that intersects with both of a direction along which the convex structure 81 extends and a direction along which the convex structures 81 are arranged. The convex structure 81 is a structure that protrudes from the surface of the workpiece W. In the example illustrated in FIG. 8(a) to FIG. 8(c), the convex structure 81 is a structure that protrudes along the Z-axis direction. Incidentally, the convex structure 81 may include a projected-shaped structure that projects against the surface of the workpiece W. The convex structure 81 may include a convex-shaped structure that is convex with respect to the surface of the workpiece W. The convex structure 81 may include a mountain-shaped structure that is a peak relative to the surface of the workpiece W.

A groove structure 82, which is depressed relative to the surrounding thereof, is formed between adjacent convex structures 81. Therefore, the riblet structure RB may include a structure in which a plurality of groove structures 82, each of which extends along the first direction that is along the surface of the workpiece W, are arranged along the second direction that is along the surface of the workpiece W and that intersects with the first direction. Namely, the riblet structure RB may include a structure in which the plurality of groove structures 82, each of which is formed to extend along the first direction, are arranged along the second direction. In the example illustrated in FIG. 8(a) to FIG. 8(c), the riblet structure RB includes a structure in which the plurality of groove structures 82, each of which extends along the X-axis direction, are arranged along the Y-axis direction. Note that the groove structure 82 may be referred to as a groove-shaped structure.

Incidentally, the convex structure 81 may be regarded as a structure that protrudes from the groove structure 82. The convex structure 81 may be regarded as a structure that forms at least one of the projected-shaped structure, the convex-shaped structure, and the mountain-shaped structure between two adjacent groove structures 82. The groove structure 82 may be regarded as a structure depressed from the convex structure 81. The groove structure 82 may be regarded as a structure that forms a groove-shaped structure between two adjacent convex structures 81.

A height H_rb of at least one of the plurality of convex structures 81 may be set to be a height that is determined based on a pitch P_rb of the convex structures 81. For example, the height H_rb of at least one of the plurality of convex structures 81 may be equal to or less than the pitch P_rb of the convex structures 81. For example, the height H_rb of at least one of the plurality of convex structures 81 may be equal to or less than a half of the pitch P_rb of the convex structures 81. As one example, the pitch P_rb of the convex structures 81 may be larger than 5 micrometers and less than 200 micrometers. In this case, the height H_rb of at least one of the plurality of convex structures 81 may be larger than 2.5 micrometers and less than 100 micrometers.

In this manner, the riblet structure RB includes the convex structure 81 and the groove structure 82. In this case, at least one of the convex structure 81 and the groove structure 82 may be regarded as a structure by which the resistance (especially at least one of the frictional resistance and the turbulent frictional resistance) of the surface of the workpiece W to the fluid is reducible

The processing unit 1 may form the groove structure 82 included in the riblet structure RB by performing the subtractive manufacturing on the workpiece W. For example, the processing unit 1 may form the groove structure 82 by removing a removal target part of the workpiece W at which the groove structure 82 should be formed. In this case, the processing unit 1 can properly form the riblet structure RB by performing the subtractive manufacturing on the workpiece W.

Incidentally, when two adjacent groove structures 82 are formed by the subtractive manufacturing, the convex structure 81 is substantially formed between the two groove structures 82. Therefore, the processing unit 1 may be considered to form the convex structure 81 included in the riblet structure RB by performing the subtractive manufacturing on the workpiece W. Namely, the processing unit 1 may be considered to form both the convex structure 81 and the groove structure 82 included in the riblet structure RB by performing the subtractive manufacturing on the workpiece W.

The processing unit 1 may form the convex structure 81 included in the riblet structure RB by performing the additive manufacturing on the workpiece W. For example, the processing unit 1 may form the convex structure 81 by building the build object that is the convex structure 81 on an additive target part of the workpiece W at which the convex structure 81 should be formed. In this case, the processing unit 1 can properly form the riblet structure RB by performing the additive manufacturing on the workpiece W.

Incidentally, when two adjacent convex structures 81 are formed by the additive manufacturing, the groove structure 82 is substantially formed between the two convex structures 81. Therefore, the processing unit 1 may be considered to form the groove structure 82 included in the riblet structure RB by performing the additive manufacturing on the workpiece W. Namely, the processing unit 1 may be considered to form both the convex structure 81 and the groove structure 82 included in the riblet structure RB by performing the additive manufacturing on the workpiece W.

In order to form the riblet structure RB, the processing unit 1 may move the plurality of irradiation areas PA, onto which the plurality of processing lights EL are irradiated on the surface of the workpiece W, along a direction in which at least one of the convex structure 81 and the groove structure 82, which should be formed on the workpiece W, extends. The processing unit 1 may form at least one of the convex structure 81 and the groove structure 82 by moving the plurality of irradiation areas PA along the direction in which at least one of the convex structure 81 and the groove structure 82, which should be formed on the workpiece W, extends.

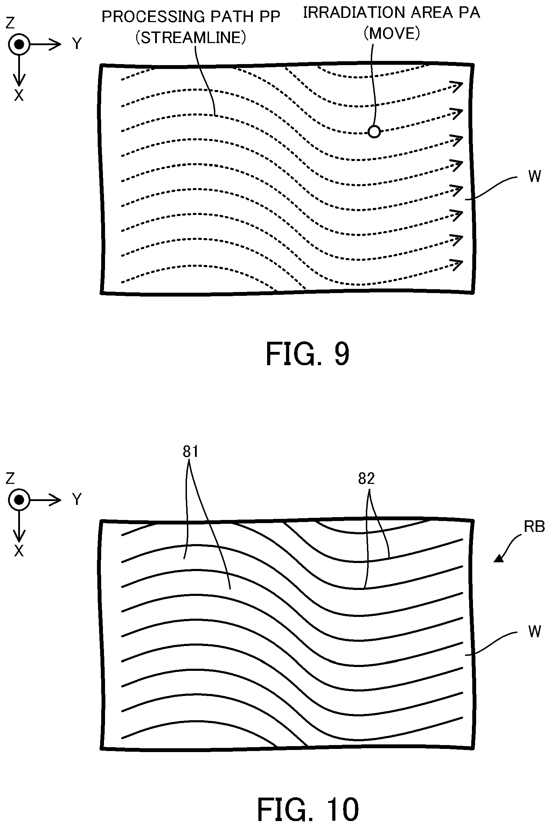

Specifically, the control unit 2 may generate a target movement route of the plurality of irradiation areas PA on the surface of the workpiece W based on information related to the convex structure 81 and the groove structure 82 that should be formed on the workpiece W. Incidentally, in the present example embodiment, the target movement route of the plurality of irradiation areas PA is referred to as a processing path PP. FIG. 9 illustrates one example of the processing path PP. As illustrated in FIG. 9, the processing path PP extends along at least one of the convex structure 81 and the groove structure 82 that should be formed on the workpiece W. In this case, the control unit 2 may generate the processing path PP based on riblet direction information indicating the direction along which the convex structure 81 and the groove structure 82, which should be formed on the workpiece W, extend on the surface of the workpiece W. Then, the control unit 2 may control the processing unit 1 to irradiate the workpiece W with the plurality of processing lights EL, while controlling at least one of the Galvano mirrors 1313 and 1351, which are configured to move the plurality of irradiation areas PA, so that the plurality of irradiation areas PA move along the generated processing path PP. As a result, the riblet structure RB is formed on the workpiece W. Specifically, as illustrated in FIG. 10 that illustrates the riblet structure RB formed by using the processing path PP illustrated in FIG. 9, the riblet structure RB, which includes at least one of the convex structure 81 and the groove structure 82 extending along the processing path PP, is formed on the workpiece W.

The riblet direction information, which is used to generate the processing path PP, may include information indicating a direction along which a ridge on the surface of the workpiece W extend. Incidentally, a streamline in the present example embodiment may mean a curved line whose tangent line corresponds to a velocity vector of the fluid at each part of the surface of the workpiece W in a situation where the fluid flows on the surface of the workpiece W. Namely, the streamline in the present example embodiment may mean a curved line whose tangent line correspond to a velocity vector in a flow field on the surface of the workpiece W. In this case, as illustrated in FIG. 9, the control unit 2 may generate the processing path PP so that a direction along which the processing path PP extends at each position on the surface of the workpiece W is the same as a direction along which the streamline extends at each position on the surface of the workpiece W. The control unit 2 may generate the processing path PP so that the processing path PP at each position on the surface of the workpiece W extends along the direction along which the streamline extends at each position on the surface of the workpiece W. In this case, as illustrated in FIG. 10, the processing unit 1 may form the riblet structure RB based on the processing path PP so that the direction along which at least one of the convex structure 81 and the groove structure 82 extends at each position on the surface of the workpiece W is the same as the direction along which the streamline extends at each position on the surface of the workpiece W. The processing unit 1 may form the riblet structure RB based on the processing path PP so that at least one of the convex structure 81 and the groove structure 82 at each position on the surface of the workpiece W extends in the direction along which the streamline extends at each position on the surface of the workpiece W. The processing unit 1 may form the riblet structure RB based on the processing path PP so that at least one of the convex structure 81 and the groove structure 82 extending along the streamline at each position on the surface of the workpiece W is formed at each position on the surface of the workpiece W. As a result, the processing unit 1 can form the riblet structure RB by which a resistance (especially at least one of a frictional resistance and a turbulent frictional resistance) of the surface of the workpiece W to a fluid is reducible more efficiently.

Incidentally, the control unit 2 may generate the processing path PP not only in a case where the processing unit 1 forms the desired structure such as the riblet structure RB, but also in a case where the processing unit 1 performs any processing operation for processing the workpiece W. Furthermore, even in a case where the processing unit 1 performs any processing operation for processing the workpiece W, the control unit 2 may control the processing unit 1 to irradiate the workpiece W with the plurality of processing lights EL, while controlling at least one of the Galvano mirrors 1313 and 1351, which is configured to move the plurality of irradiation areas PA, so that the plurality of irradiation areas PA move along the generated processing path PP.

### (2-2) Specific Example of Operation for Changing Arrangement Direction LD of Plurality of Irradiation Areas PA onto which Plurality of Processing Lights EL Are Irradiated, Respectively

As described above, in the present example embodiment, the processing unit 1 may change the arrangement direction LD of the plurality of irradiation areas PA under the control of the control unit 2. Namely, as described above, the control unit 2 may control the processing unit 1 (especially, may control the actuator 1323) to change the arrangement direction LD. In the present example embodiment, the processing unit 1 may change the arrangement direction LD based on the processing path PP that is the target movement trajectory of the plurality of irradiation areas PA. Namely, the control unit 2 may control the processing unit 1 to change the arrangement direction LD based on the processing path PP.

Specifically, the processing unit 1 may change the arrangement direction LD based on a path direction PD that is a direction along which the processing path PP extends (namely, a direction along the processing path PP). Namely, the control unit 2 may control the processing unit 1 so as to change the arrangement direction LD based on the path direction PD. Incidentally, the path direction PD may be referred to as a route direction. As one example, the processing unit 1 may change the arrangement direction LD so that a relationship between the path direction PD and the arrangement direction LD is a predetermined relationship. Namely, the control unit 2 may control the processing unit 1 so that the relationship between the path direction PD and the arrangement direction LD is predetermined relationship by changing the arrangement direction LD. In other words, the processing unit 1 may change the arrangement direction LD so that the path direction PD and the arrangement direction LD have the predetermined relationship. Namely, the control unit 2 may control the processing unit 1 so that the path direction PD and the arrangement direction LD have the predetermined relationship by changing the arrangement direction LD. Next, an operation for changing the arrangement direction LD based on the processing path PP will be described.

Incidentally, in the below-described description, an example in which the plurality of irradiation areas PA are arranged in the arrangement pattern illustrated in FIG. 5(a) will be described for the simple description. Furthermore, in the below-described description, an example in which the processing unit 1 performs the subtractive manufacturing by using the plurality of processing lights EL irradiated onto the plurality of irradiation areas PA, respectively, will be described for the sake of simple description. As one example, in the below-described description, an example in which the processing unit 1 forms the groove structure 82 of the riblet structure RB by irradiating the workpiece W with the plurality of processing lights EL will be described. However, even in a case where the plurality of irradiation areas PA are arranged in the arrangement pattern that is different from the arrangement pattern illustrated in FIG. 5(a) or are positioned at the random positions, the processing unit 1 may change the arrangement direction LD based on the processing path PP in an changing manner described below. Even in a case where the processing unit 1 performs the processing that is different from the subtractive manufacturing, the processing unit 1 may change the arrangement direction LD based on the processing path PP in the changing manner described below.

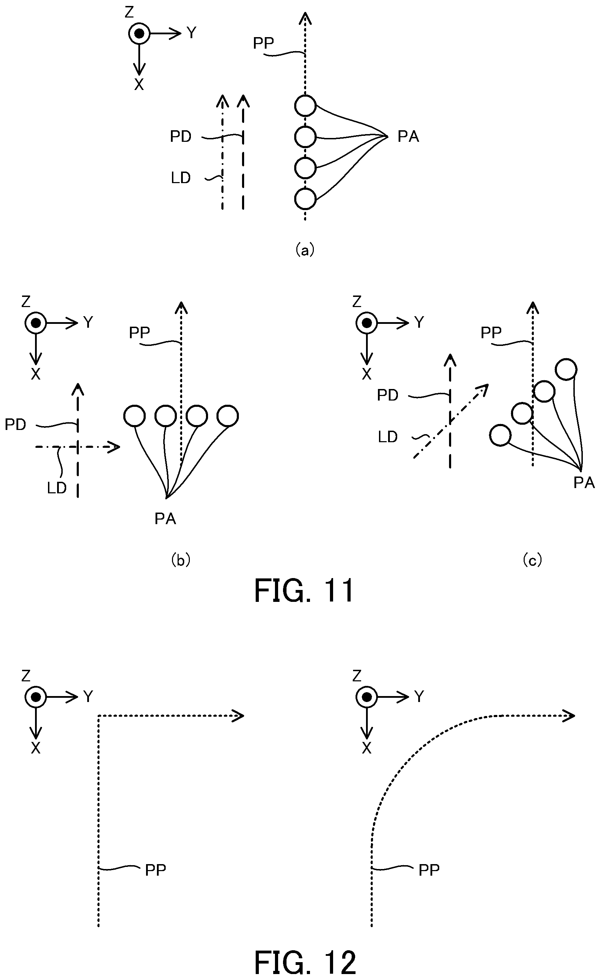

As illustrated in FIG. 11(a) that illustrates a first example of the relationship between the path direction PD and the arrangement direction LD, the processing unit 1 may change the arrangement direction LD so that the path direction PD is the same as the arrangement direction LD. The processing unit 1 may change the arrangement direction LD so that the arrangement direction LD is the path direction PD. The processing unit 1 may change the arrangement direction LD so that an angle between an axis extending along the arrangement direction LD and an axis extending along the path direction PD is zero degrees.

More specifically, the processing unit 1 may change the arrangement direction LD so that the path direction PD is the same as the arrangement direction LD at each position of the processing path PP. The processing unit 1 may change the arrangement direction LD so that the arrangement direction LD at each position of the processing path PP is the path direction PD at each position of the processing path PP. The processing unit 1 may change the arrangement direction LD so that the angle between the axis extending along the arrangement direction LD at each position of the processing path PP and the axis extending along the path direction PD at each position of the processing path PP is zero degrees.

In this case, as illustrated in FIG. 11(a), the processing unit 1 may form a single groove structure 82 by using the plurality of processing lights EL that are irradiated onto the plurality of irradiation areas PA, respectively, on the surface of the workpiece W. In this case, the processing unit 1 can easily change the pitch of the groove structure 82 by using at least one of the Galvano mirrors 1313 and 1351 to move the plurality of irradiation areas PA together along a direction intersecting the arrangement direction LD. Therefore, the processing unit 1 can easily form the riblet structure RB that includes the groove structures 82 with various pitches.

As illustrated in FIG. 11(b) that illustrates a second example of the relationship between the path direction PD and the arrangement direction LD and FIG. 11(c) that illustrates a third example of the relationship between the path direction PD and the arrangement direction LD, the processing unit 1 may change the arrangement direction LD so that the arrangement direction LD intersects the path direction PD. More specifically, the processing unit 1 may change the arrangement direction LD so that the arrangement direction LD intersects the path direction PD intersect at each position of the processing path PP.

FIG. 11(b) illustrates an example in which the arrangement direction LD is orthogonal to the path direction PD. Namely, FIG. 11(b) illustrates an example in which the angle between the axis extending along the arrangement direction LD and the axis extending along the path direction PD is 90 degrees. In other words, FIG. 11(b) illustrates an example in which the arrangement direction LD intersects the path direction PD at an intersection angle of 90-degrees.

On the other hand, FIG. 11(c) illustrates an example in which the arrangement direction LD is not orthogonal to but intersects the path direction PD. In other words, FIG. 11(c) illustrates an example in which the angle between the axis extending along the arrangement direction LD and the axis extending along the path direction PD is greater than 0 degrees and less than 90 degrees. In other words, FIG. 11(c) illustrates an example in which the LD direction and the PD direction intersect at an intersection angle greater than 0 degrees and less than 90 degrees. FIG. 11(c) illustrates an example in which the arrangement direction LD is inclined with respect to the path direction PD.

In this case, as illustrated in FIG.s 11(b) and 11(c), the processing unit 1 may form the plurality of groove structures 82 simultaneously by using the plurality of processing lights EL irradiated onto the plurality of irradiation areas PA, respectively, on the surface of the workpiece W. In this case, one groove structure 82 is formed by using one processing light EL that is irradiated onto one irradiation area PA. In this case, the irradiation area PA moves from one end to the other end of an linear area, onto which the processing light EL is should be irradiated to form one groove structure 82 on the workpiece W, in order to form one groove structure 82. Namely, the number of times the irradiation area PAis formed in a first part of the area that should be irradiated with the processing light EL to form one groove structure 82 on the workpiece W is not different from the number of times the irradiation area PA is formed in a second part of the area that should be irradiated with the processing light EL to form one groove structure 82 on the workpiece W. Therefore, it is less likely that an amount of energy transferred from the processing light EL to the workpiece W to form a first part of one groove structure 82 is significantly different from an amount of energy transferred from the processing light EL to the workpiece W to form a second part of the one groove structure 82. As a result, it is less likely that a size (for example, a depth) of the first part of the groove structure 82 is significantly different from a size of the second part of the groove structure 82. As a result, the processing unit 1 can form the groove structure 82 having a uniform size. In other words, the processing unit 1 can suppress a variation of the size of the groove structure 82.

Incidentally, as illustrated in FIG. 11(b) and FIG. 11(c), one groove structure 82 may be formed on the workpiece W by using the plurality of irradiation areas PA in which the arrangement direction LD intersects the path direction PD. This method is especially effective in a case where the width of the groove structure 82 between two convex structures 81 (the width of the groove structure 82 in the direction along which the two convex structures 81 are arranged) is wide.

The processing unit 1 may change the arrangement direction LD of the plurality of irradiation areas PA based on the processing path PP in at least a part of a period during which the plurality of irradiation areas EA are moved along the processing path PP by using at least one of the Galvano mirrors 1313 and 1351 under the control of the control unit 2. Namely, the processing unit 1 may change the arrangement direction LD of the plurality of irradiation areas PA based on the processing path PP in a second period that is at least a part of a first period during which the plurality of irradiation areas EA are moved along the processing path PP by using at least one of the Galvano mirrors 1313 and 1351. The processing unit 1 may change the arrangement direction LD of the plurality of irradiation areas PA based on the processing path PP while using at least one of the Galvano mirrors 1313 and 1351 to move the plurality of irradiation areas EA along the processing path PP.

The path direction PD along which the processing path PP extends may change in the period during which the plurality of irradiation areas EA are moved along the processing path PP. For example, as illustrated in FIG. 12(a) that illustrates one example of the processing path PP, the path direction PD may change from a direction along the X-axis to a direction along the Y-axis. For example, as illustrated in FIG. 12(b)that illustrates another example of the processing path PP, the path direction PD may gradually change from a direction along the X-axis to a direction along the Y-axis through a direction intersecting both the X-axis and Y-axis. In this case, the processing unit 1 may change the arrangement direction LD of the plurality of irradiation areas PA based on the path direction PD that changes in the period during which the plurality of irradiation areas EA are moved along the processing path PP under the control of the control unit 2. In other words, the processing unit 1 may change the arrangement direction LD in accordance with the change of the path direction PD in the period during which the plurality of irradiation areas EA are moved along the processing path PP under the control of the control unit 2.

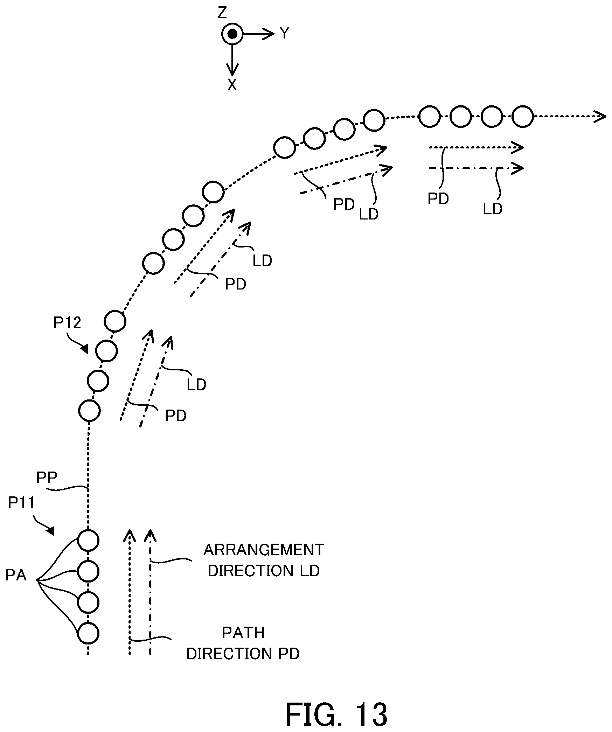

As one example, as illustrated in FIG. 13 that illustrates one example of the arrangement direction LD being changed in accordance with the change of the path direction PD, the processing unit 1 may change the arrangement direction LD so that the arrangement direction LD is the same as the path direction PD at each position on the processing path PP. The processing unit 1 may change the arrangement direction LD so that the arrangement direction LD at each position on the processing path PP is the path direction PD at each position on the processing path PP. For example, in a case where the plurality of irradiation areas PA are positioned at a first position P11 on the processing path PP, the processing unit 1 may change the arrangement direction LD so that the arrangement direction LD at the first position P11 is the path direction PD at the first position P11. Then, in a case where the plurality of irradiation areas PA move from the first position P11 to a second position P12, which is different from the first position P11, on the processing path PP, the processing unit 1 may change the arrangement direction LD so that the arrangement direction LD at the second position P12 is the path direction PD at the second position P12. In this case, in a case where the path direction PD at the second position P12 is different from the path direction PD at the first position P11 as illustrated in FIG. 13, the processing unit 1 may change the arrangement direction LD so that the arrangement direction LD at the second position P12 is a direction that is different from the arrangement direction LD at the first position P11. However, in a case where the path direction PD at the second position P12 is the same as the path direction PD at the first position P11, the processing unit 1 may not change the arrangement direction LD.

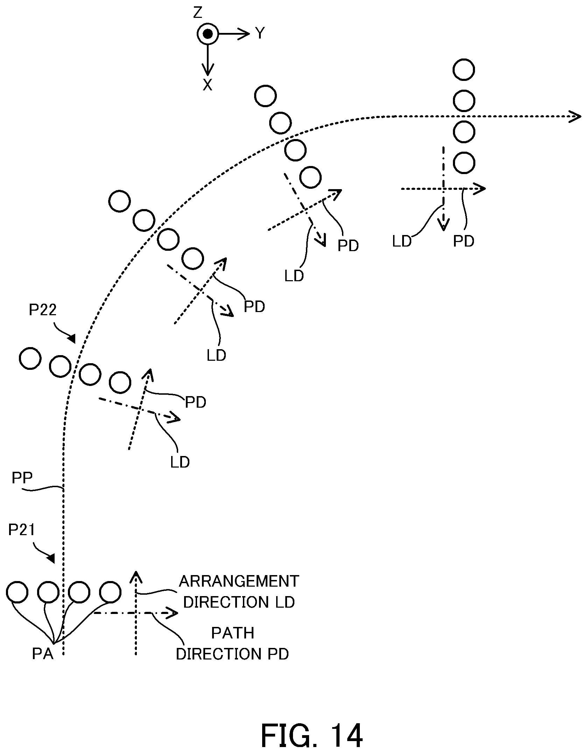

As another example, as illustrated in FIG. 14 that illustrates one example of arrangement direction LD being changed in accordance with the change of the path direction PD, the processing unit 1 may change the arrangement direction LD so that the arrangement direction LD intersects the path direction PD at the same predetermined intersection angle at each position on the processing path PP. Incidentally, FIG. 14 illustrates an example in which the arrangement direction LD intersects the path direction PD at the intersection angle of 90 degrees at each position on the processing path PP. For example, in a case where the plurality of irradiation areas PA are positioned at a first position P21 on the processing path PP, the processing unit 1 may change the arrangement direction LD so that the arrangement direction LD at the first position P21 intersects the path direction PD at the first position P21 at the predetermined intersection angle (90 degrees in the example illustrated in FIG. 14). Then, in a case where the plurality of irradiation areas PA move from the first position P21 to a second position P22, which is different from the first position P21, on the processing path PP, the processing unit 1 may change the arrangement direction LD so that the arrangement direction LD at the second position P22 intersects the path direction PD at the second position P22 at the predetermined intersection angle (90 degrees in the example illustrated in FIG. 14). In this case, as illustrated in FIG. 14, in a case where the path direction PD at the second position P22 is different from the path direction PD at the first position P21, the processing unit 1 may change the arrangement direction LD so that the arrangement direction LD at the second position P22 is a direction that is different from the arrangement direction LD at the first position P21. However, in a case where the path direction PD at the second position P22 is the same as the path direction PD at the first position P21, the processing unit 1 may not change the arrangement direction LD.

In any case, the processing unit 1 may be considered to change the arrangement direction LD of the plurality of irradiation areas PA so that the relationship between the path direction PD and the arrangement direction LD is maintained in the period during which the plurality of irradiation areas EA are moved along the processing path PP. In other words, the processing unit 1 may be considered to change the arrangement direction LD of the plurality of irradiation areas PA so that the relationship between the path direction PD and the arrangement direction LD does not change in the period during which the plurality of irradiation areas EA are moved along the processing path PP.

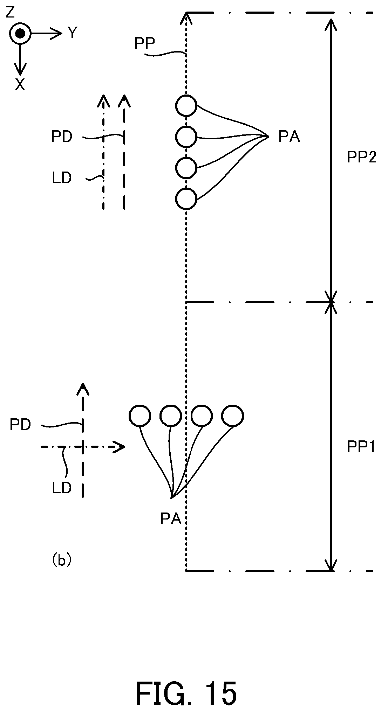

However, the processing unit 1 may change the arrangement direction LD so that the relationship between the path direction PD and the arrangement direction LD changes in the period during which the plurality of irradiation areas EA are moved along the processing path PP. For example, the processing unit 1 may change the arrangement direction LD of the plurality of irradiation areas PA so that the relationship between the path direction PD and the arrangement direction LD is a first relationship at a first position on the processing path PP, and the relationship between the path direction PD and the arrangement direction LD changes to be the first relationship at a second position, which is different from the first position, on the processing path PP. As one example, as illustrated in FIG. 15, the processing unit 1 may change the arrangement direction LD so that the arrangement direction LD is the same as the path direction PD in a period during which the plurality of irradiation areas EA are moved along a first path part PP1 of the processing path PP. Then, the processing unit 1 may change the arrangement direction LD so that the arrangement direction LD intersects the path direction PD in a period during which the plurality of irradiation areas EA are moved along a second path part PP2, which is different from the first path part PP1, of the processing path PP.

### (3) Technical Effect

As described above, the processing system SYS in the present example embodiment may process the workpiece W by irradiating the workpiece W with the plurality of processing lights EL. Therefore, a throughput for processing the workpiece W is improved compared to a case where the workpiece W is processed by using a single processing light EL.

Furthermore, the processing system SYS may change the arrangement direction LD of the plurality of irradiation areas PA based on the processing path PP that is the target movement trajectory of the plurality of irradiation areas PA. Therefore, the processing system SYS may irradiate the workpiece W with the plurality of processing lights EL so that the plurality of irradiation areas PA have an appropriate positional relationship with respect to the processing path PP. Therefore, the processing system SYS can process the workpiece W appropriately in a case where the plurality of irradiation areas PA do not have the appropriate positional relationship with respect to the processing path PP.

As one example, as described above, the processing system SYS may change the arrangement direction LD so that the arrangement direction LD is the same as the path direction PD (see FIG. 11(a)). In this case, as described above, the processing system SYS can easily form the riblet structure RB including the groove structures 82 (alternatively, the convex structures 81) of various pitches.

As another example, as described above, the processing system SYS may change the arrangement direction LD so that the arrangement direction LD intersects the path direction PD (see FIG. 11(b) and FIG. 11(c)). In this case, as described above, the processing system SYS can suppress the variation of the size of the groove structure 82 (alternatively, the convex structure 81).

### (4) Modified Example

Next, a modified example of the processing system SYS will be described.

### (4-1) First Modified Example

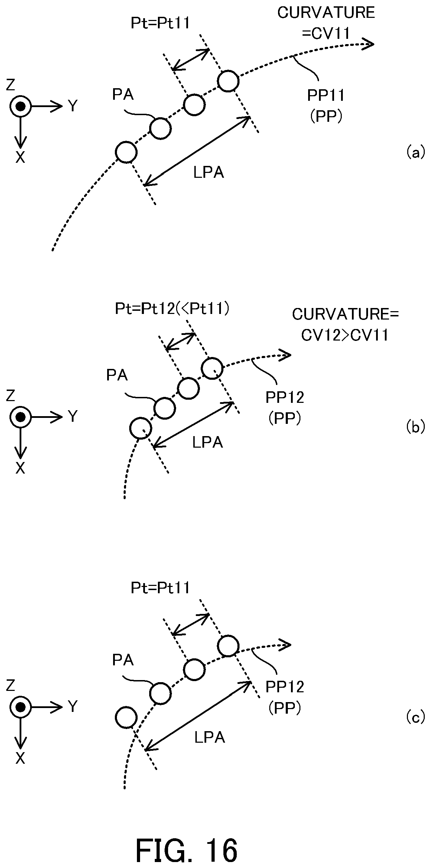

In a first modified example, the processing unit 1 may change a relative positional relationship between the plurality of irradiation areas PA based on a curvature of the processing path PP under the control of the control unit 2. For example, FIG. 16(a) illustrates a processing path PP11 that is one example of the processing path PP or a part of the processing path PP, and FIG. 16(b) illustrates a processing path PP12 that is another example of the processing path PP or another part of the processing path PP. The curvature of the processing path PP11 is curvature CV11. The curvature of the processing path PP12 is curvature CV12 that is different from the curvature CV11. In this case, the processing unit 1 may change the relative positional relationship between the plurality of irradiation areas PA so that the relative positional relationship between the plurality of irradiation areas PA moving along the processing path PP11 is different from the relative positional relationship between the plurality of irradiation areas PA moving along the processing path PP12.

The relative positional relationship between the plurality of irradiation areas PA may include a pitch Pt of the irradiation areas PA. The pitch Pt of the irradiation areas PA may mean an interval (in other words, the distance) between two irradiation areas PA that are adjacent to each other along the arrangement direction LD, as illustrated in FIG. 16(a) and FIG. 16(b). In this case, the processing unit 1 may change the pitch Pt of the plurality of irradiation areas PA so that the pitch Pt of the plurality of irradiation areas PA moving along the processing path PP11 is different from the pitch Pt of the plurality of irradiation areas PA moving along the processing path PP12.

Incidentally, in a case where the number of irradiation areas PA is three or more, the intervals each of which is between respective two adjacent irradiation areas PA along the arrangement direction LD may be different from each other. In a case where the intervals each of which is between the respective two adjacent irradiation areas PA along the LD are different from each other, one or more interval of the intervals each of which is between the respective two adjacent irradiation areas PA may be regarded as the relative positional relationship between the plurality of irradiation areas PA. An average value of the intervals each of which is between the respective two adjacent irradiation areas PA may be regarded as the relative positional relationship between the plurality of irradiation areas PA.

The processing unit 1 may include an optical member that is configured to change the pitch Pt of the plurality of irradiation areas PA. A zoom optical system that is configured to change a magnification of a virtual image formed by the plurality of processing lights EL is one example of this optical member. A plurality of deflection member that are configured to deflect the plurality of processing lights EL, respectively, is another example of this optical member. A Galvano mirror is one example of the deflection member.

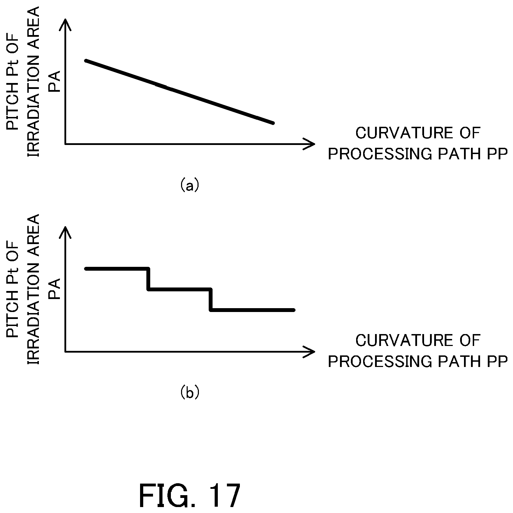

The processing unit 1 may change the pitch Pt of the plurality of irradiation areas PA so that the pitch Pt of the plurality of irradiation areas PA moving along the processing path PP is smaller as the curvature of the processing path PP is larger. For example, as illustrated in FIG. 17(a) that is a graph illustrating a relationship between the curvature of the processing path PP and the pitch Pt of the plurality of irradiation areas PA, the processing unit 1 may change the pitch Pt of the plurality of irradiation areas PA so that the pitch Pt of the plurality of irradiation areas PA is continuously smaller as the curvature of the processing path PP is larger. For example, as illustrated in FIG. 17(b) that is a graph illustrating a relationship between the curvature of the processing path PP and the pitch Pt of the plurality of irradiation areas PA, the processing unit 1 may change the pitch Pt of the plurality of irradiation areas PA so that the pitch Pt of the plurality of irradiation areas PA is smaller in stages as the curvature of the processing path PP is larger.

As one example, in a case where the curvature CV11 of the processing path PP12 illustrated in FIG. 16(b) is larger than the curvature CV11 of the processing path PP11 illustrated in FIG. 16(a), the processing unit 1 may change the pitch Pt of the plurality of irradiation areas PA so that the pitch Pt of the plurality of irradiation areas PA moving along the processing path PP12 is smaller than the pitch Pt of the plurality of irradiation areas PA moving along the processing path PP11. For example, as illustrated in FIG. 16(a), the processing unit 1 may set the pitch Pt of the plurality of irradiation areas PA moving along the processing path PP11 to a pitch Pt11. On the other hand, as illustrated in FIG. 16(b), the processing unit 1 may set the pitch Pt of the plurality of irradiation areas PA moving along the processing path PP12 to a pitch Pt12 that is smaller than pitch Pt11.

The processing unit 1 may change the pitch Pt of the plurality of irradiation areas PA so that the pitch Pt of the plurality of irradiation areas PA moving along the processing path PP is smaller as the curvature of the processing path PP is greater, in a case where the plurality of irradiation areas PA are arranged so that the arrangement direction LD is the same as the path direction PD as illustrated in FIG. 11 (a). Here, FIG. 16(b) illustrates an example in which the pitch Pt of the irradiation areas PA is changed from the pitch Pt11 to the pitch Pt12 in a case where the plurality of irradiation areas PA, which are arranged so that the arrangement direction LD is the same as the path direction PD, move along the processing path PP12 whose curvature is relatively large. On the other hand, FIG. 16(c) illustrates an example in which the pitch Pt of the irradiation areas PA is not changed from the pitch Pt11 in a case where the plurality of irradiation areas PA, which are arranged so that the arrangement direction LD is the same as the path direction PD, move along the processing path PP12 whose curvature is relatively large. As illustrated in FIG. 16(b) and FIG. 16(c), it is more likely that the number of irradiation areas PA positioned at a position distant from the processing path PP is smaller in a case where the pitch Pt of the irradiation area PA is changed, compared to a case where the pitch Pt of the irradiation area PA is not changed. It is more likely that a distance from the processing path PP to each irradiation area PA is shorter in a case where the pitch Pt of the irradiation area PA is changed, compared to a case where the pitch Pt of the irradiation area PA is not changed. As a result, the processing unit 1 can move the plurality of irradiation areas PA along the processing path PP as much as possible, and as a result, can process the workpiece W properly in a processing aspect based on the processing path PP.

Incidentally, an operation for changing the pitch Pt of the plurality of irradiation areas PA that are arranged so that the arrangement direction LD is the same as the path direction PD may be considered to be equivalent to an operation for changing a length LPA of the plurality of irradiation areas PA moving along the path direction PD (namely, along the arrangement direction LD). The length LPA of the plurality of irradiation areas PA moving along the path direction PD may mean an interval between two irradiation areas PA at both ends of the plurality of irradiation areas PA that are arranged along the path direction PD, as illustrated in FIG. 16(a) to FIG. 16(c). In this case, the processing unit 1 may be considered to change the length LPA of the plurality of irradiation areas PA so that the length LPA of the plurality of irradiation areas PA moving along the processing path PP11 is different from the length LPA of the plurality of irradiation areas PA moving along the processing path PP12. The processing unit 1 may be considered to changes the length LPA of the plurality of irradiation areas PA so that the length LPA of the plurality of irradiation areas PA moving along the processing path PP is shorter as the curvature of the processing path PP is larger.

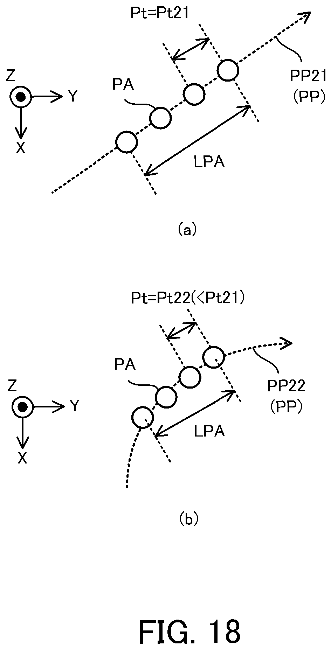

Moreover, each of FIG. 16(a) to FIG. 16(c) illustrates an example in which the processing unit 1 changes the relative positional relationship between the plurality of irradiation areas PA based on the curvature of the processing path PP in a case where the processing path PP indicates a curved target movement route (namely, the curvature of the processing path PP is greater than zero). However, even in a case where the processing path PP indicates a linear target movement route (namely, the curvature of the processing path PP is zero), the processing unit 1 may change the relative positional relationship between the plurality of irradiation areas PA based on the curvature of the processing path PP. For example, the processing unit 1 may change the pitch Pt of the plurality of irradiation areas PA so that the pitch Pt of the plurality of irradiation areas PA moving along the curved processing path PP whose curvature us greater than zero is smaller than the pitch Pt of the plurality of irradiation areas PA moving along the straight processing path PP whose curvature is zero. As one example, as illustrated in FIG. 18(a), the processing unit 1 may set the pitch Pt of the plurality of irradiation areas PA moving along a linear processing path PP21 to a pitch Pt21. On the other hand, as illustrated in FIG. 18(b), the processing unit 1 may set the pitch Pt of the plurality of irradiation areas PA moving along a curved processing path PP22 to a pitch Pt22 that is smaller than the pitch Pt21. Even in this case, the processing system SYS can achieve the effect described above.

Moreover, not only in a case where the plurality of irradiation areas PA are arranged so that the arrangement direction LD is the same as the path direction PD, but also in a case where the plurality of irradiation areas PA are arranged so that the arrangement direction LD intersects the path direction PD (see FIG. 11 (b) and FIG. 11 (c)), the processing unit 1 may change the pitch Pt of the plurality of irradiation areas PA so that the pitch Pt of the plurality of irradiation areas PA moving along the processing path PP is smaller as the curvature of the processing path PP is larger. Incidentally, an operation for changing the pitch Pt of the plurality of irradiation areas PA that are arranged so that the arrangement direction LD intersects the path direction PD may be considered to be equivalent to an operation for changing a width of the plurality of irradiation areas PA moving along the path direction PD. The width of the plurality of irradiation areas PA moving along the path direction PD may mean an interval between irradiation areas PA at both ends of the plurality of irradiation areas PA that are arranged along the arrangement direction LD intersecting the path direction PD.

### (4-2) Second Modified Example

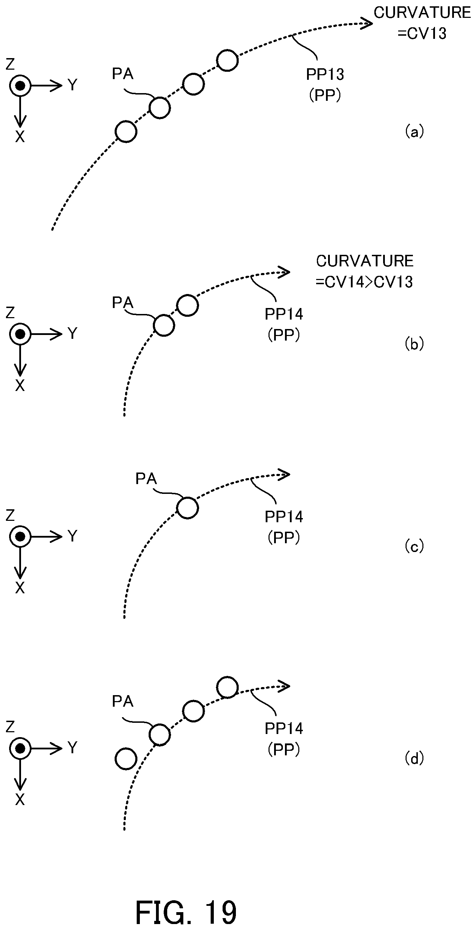

In a second modified example, the processing unit 1 may change the number of irradiation areas PA based on the curvature of the processing path PP under the control of the control unit 2. For example, FIG. 19(a) illustrates a processing path PP13 that is one example of the processing path PP or a part of the processing path PP, and each of FIG. 19(b) and FIG. 19(c) illustrates a processing path PP14 that is another example of the processing path PP or another part of the processing path PP. The curvature of the processing path PP13 is curvature CV13. The curvature of the processing path PP14 is curvature CV14 that is different from the curvature CV13. In this case, the processing unit 1 may change the number of irradiation areas PA so that the number of irradiation areas PA moving along the processing path PP13 is different from the number of irradiation areas PA moving along the processing path PP14.

The processing unit 1 may change the number of irradiation areas PA so that the number of irradiation areas PA moving along the processing path PP is smaller as the curvature of the processing path PP is larger. For example, in a case where the curvature CV14 of the processing path PP14 illustrated in FIG. 19(b) and 19(c) is larger than the curvature CV13 of the processing path PP13 illustrated in FIG. 19(a), the processing unit 1 may change the number of irradiation areas PA so that the number of irradiation areas PA moving along the processing path PP14 is smaller than the number of irradiation areas PA moving along the processing path PP13. For example, as illustrated in FIG. 19(a), the processing unit 1 may set the number of irradiation areas PA moving along the processing path PP13 to a first number (in the example illustrated in FIG. 19(a), 4). On the other hand, as illustrated in each of FIG. 19(b) and FIG. 19(c), the processing unit 1 may set the number of irradiation areas PA moving along the processing path PP14 to a second number that is smaller than the first number. FIG. 19(b) illustrates an example in which the number of irradiation areas PA moving along the processing path PP14 is 2. FIG. 19(c) illustrates an example in which the number of irradiation areas PA moving along the processing path PP14 is 1. As illustrated in FIG. 19(c), the processing unit 1 may change the number of irradiation areas PA so that a single irradiation area PA moves along the processing path PP14 instead of the plurality of irradiation areas PA in some cases.

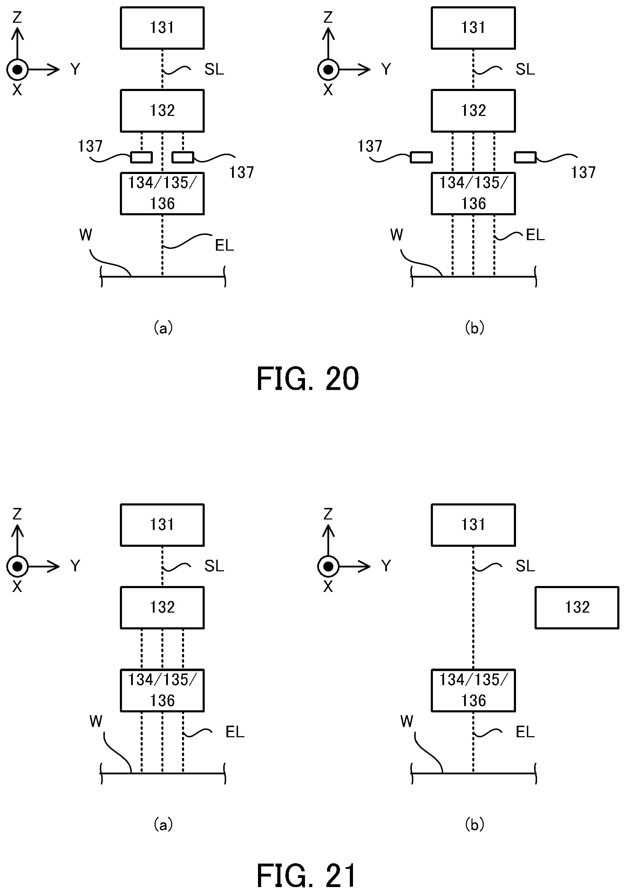

The processing unit 1 may include an optical member that is configured to change the number of irradiation areas PA. A light shield member 137 that is configured to shield at least one of the plurality of processing lights EL is one example of this optical member. In this case, a state of the light shield member 137 may be switched between a light shield state in which the light shield member 137 shields at least one of the plurality of processing lights EL and a non-light shield state in which the light shield member 137 does not shield the plurality of processing lights EL. As one example, as illustrated in FIG. 20(a) that illustrates the light shield member 137 in the light shield state, the processing unit 1 may set the state of the light shield member 137 to the light shield state by moving the light shield member 137 so that the light shield member 137 is positioned on the optical path of at least one of the plurality of processing lights EL. On the other hand, as illustrated in FIG. 20(b) that illustrates the light shield member 137 in the non-light shield state, the processing unit 1 may set the state of the light shield member 137 to the non-light shield state by moving the light shield member 137 to a position that is distant from the optical path of the plurality of processing lights EL. As a result, the number of irradiation areas PA in the light shield state is smaller than the number of irradiation areas PA in the non-light shield state.

Alternatively, the processing unit 1 may change the number of irradiation areas PA by switching a state of the multi-lights generation optical system 132 between a generation state in which the multi-lights generation optical system 132 generates the plurality of processing lights EL and a non-generation state in which the multi-lights generation optical system 132 does not generate the plurality of processing lights EL. For example, as illustrated in FIG. 21(a), the processing unit 1 may set the state of the multi-lights generation optical system 132 to the generation state by moving the multi-lights generation optical system 132 so that the multi-lights generation optical system 132 (especially the diffractive optical element 1321) is positioned on the optical path of the light source light SL. In this case, the multi-lights generation optical system 132 divides the light source light SL to generate the plurality of processing lights EL. On the other hand, as illustrated in FIG. 21(b), the processing unit 1 may set the state of the multi-lights generation optical system 132 to the non-generation state by moving the multi-lights generation optical system 132 so that the multi-lights generation optical system 132 (especially the diffractive optical element 1321) is positioned at a position that is distant from the optical path of the light source light SL. In this case, the multi-lights generation optical system 132 does not divide the light source light SL, and as a result, does not generate the plurality of processing lights EL. In this case, the light source light SL may be used as the processing light EL. As a result, the number of irradiation areas PA in the non-generation state is smaller than the number of irradiation areas PA in the generation state. Typically, the number of irradiation areas PA in the non-generation state is one.

Incidentally, the number of generated processing light EL may be changed by using a spatial light modulator, for example, a reflective type of liquid crystal element or a transmissive type of liquid crystal element such as a mirror array including a plurality of movable mirror elements arranged in an array or an LCOS-SLM (Liquid Crystal on Silicon-Spatial Light Modulator). In this case, the arrangement direction LD of the plurality of irradiation areas PA may be changed by the spatial light modulator itself, or may be changed by rotating the spatial light modulator or an image rotator.

In FIG. 19(a) to FIG. 19(c) again, the processing unit 1 may change the number of irradiation areas PA so that the number of irradiation areas PA moving along the processing path PP is smaller as the curvature of the processing path PP is larger, in a case where the plurality of irradiation areas PA are arranged so that the arrangement direction LD is the same as the path direction PD as illustrated in FIG. 11(a). Here, FIG. 19(d) illustrates an example in which the number of irradiation areas PA is not changed (namely, it remains the same) in a case where the plurality of irradiation areas PA, which are arranged so that the arrangement direction LD is the same as the path direction PD, move along the processing path PP14 whose curvature is relatively large. As illustrated in FIG. 19(b) to FIG. 19(d), it is more likely that the number of irradiation areas PA positioned at a position distant from the processing path PP is smaller in a case where the number of irradiation areas PAis changed, compared to a case where the number of irradiation areas PA is not changed. It is more likely that the distance from the processing path PP to each irradiation area PA is shorter in a case where the number of irradiation areas PA is changed, compared to a case where the number of irradiation areas PA is not changed. As a result, processing unit 1 can move irradiation area PA along processing path PP as much as possible, and as a result, can process workpiece W properly in a processing aspect based on the processing path PP.

Incidentally, an operation for changing the number of irradiation areas PAin a case where the plurality of irradiation areas PA are arranged so that the arrangement direction LD is the same as the path direction PD may be considered to be equivalent to the operation for changing the length LPA of the plurality of irradiation areas PA moving along path direction PD (namely, along the arrangement direction LD). Incidentally, the length LPA of the plurality of irradiation areas PA moving along the path direction PD may mean the interval between two irradiation areas PA at both ends of the plurality of irradiation areas PA that are arranged along the path direction PD, as described above. However, in a case where a single irradiation area PA moves along the processing path PP as illustrated in FIG. 19(c), the length LPA may mean a size of the single irradiation area PA along the path direction PD. In this case, the processing unit 1 may be considered to change the length LPA of the plurality of irradiation areas PA so that the length LPA of the plurality of irradiation areas PA moving along the processing path PP13 is different from the length LPA of the plurality of irradiation areas PA moving along the processing path PP14. The processing unit 1 may be considered to change the length LPA of the plurality of irradiation areas PA so that the length LPA of the plurality of irradiation areas PA moving along the processing path PP is shorter as the curvature of the processing path PP is larger.

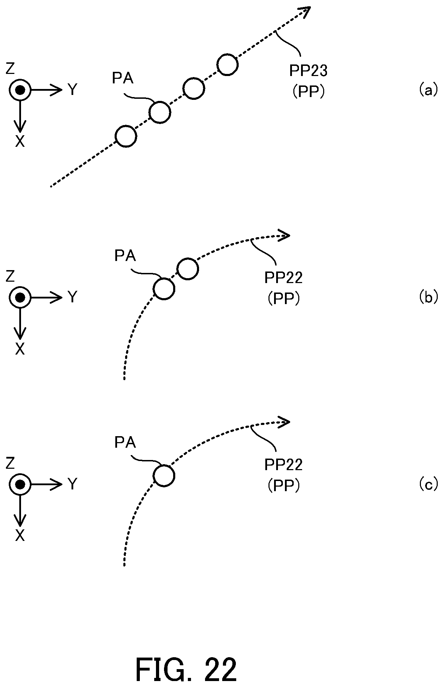

Moreover, each of FIG. 19(a) to FIG. 19(d) illustrates an example in which the processing unit 1 changes the number of irradiation areas PA based on the curvature of the processing path PP in a case where the processing path PP indicates a curved target movement route (namely, the curvature of the processing path PP is greater than zero). However, in a case where the processing path PP indicates a linear target movement route (namely, the curvature of the processing path PP is zero), the processing unit 1 may change the number of irradiation areas PA based on the curvature of the processing path PP. For example, the processing unit 1 may change the number of irradiation areas PA so that the number of irradiation areas PA moving along a curved processing path PP whose curvature is greater than zero is smaller than the number of irradiation areas PA moving along a straight processing path PP whose curvature is zero. As one example, as illustrated in FIG. 22(a), the processing unit 1 may set the number of irradiation areas PA moving along a linear processing path PP23 to a third number (in the example illustrated in FIG. 22(a), 4). On the other hand, as illustrated in each of FIG. 22(b) and FIG. 22(c), the processing unit 1 may set the number of irradiation areas PA moving along a curved processing path PP24 to a fourth number that is smaller than the third number. FIG. 22(b) illustrates an example in which the number of irradiation areas PA moving along the processing path PP24 is 2. FIG. 22(c) illustrates an example in which the number of irradiation areas PA moving along the processing path PP24 is 1. Even in this case, the processing system SYS can achieve the effect described above.

Moreover, not only in a case where the plurality of irradiation areas PA are arranged so that the arrangement direction LD is the same as the path direction PD, but also in a case where the plurality of irradiation areas PA are arranged so that the arrangement direction LD intersects the path direction PD (see FIG. 11 (b) and FIG. 11 (c)), the processing unit 1 may change the number of irradiation areas PA so that the number of irradiation areas PA moving along the processing path PP is smaller as the curvature of the processing path PP is larger. Incidentally, an operation for changing the number of irradiation areas PA in a case where the plurality of irradiation areas PA are arranged so that the arrangement direction LD intersect the path direction PD may be considered to be equivalent to the operation for changing the width of the plurality of irradiation areas PA moving along the path direction PD. As described above, the width of the plurality of irradiation areas PA moving along the path direction PD may mean the distance between the irradiation areas PA at both ends of the plurality of irradiation areas PA that are arranged along the arrangement direction LD intersecting the path direction PD. However, in a case where a single irradiation area PA moves along the processing path PP as illustrated in FIG. 19(c), the width may mean the size of a single irradiation area PA along the arrangement direction

### LD.

### (4-3) Third Modified Example

In the above-described description, the processing unit 1 changes the arrangement direction LD of the plurality of irradiation areas PA by rotating the diffractive optical element 1321 around the rotational axis RX1. On the other hand, in a third modified example, the arrangement direction LD of the plurality of irradiation areas PA may be changed by a method that is different from the method for rotating the diffractive optical element 1321 around the rotational axis RX1.

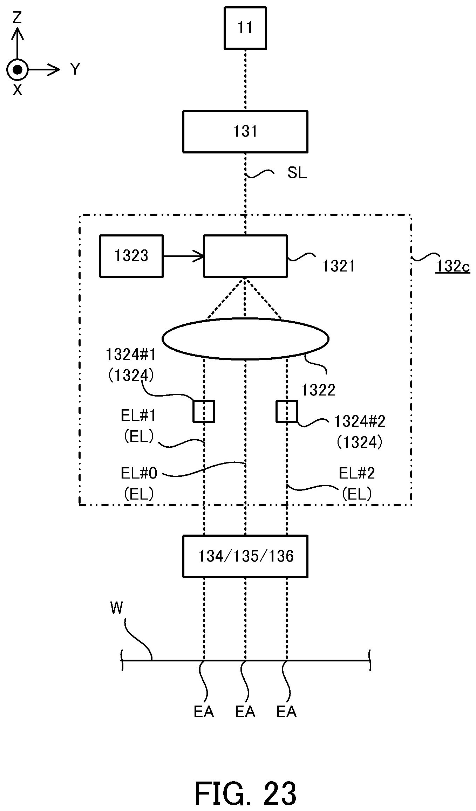

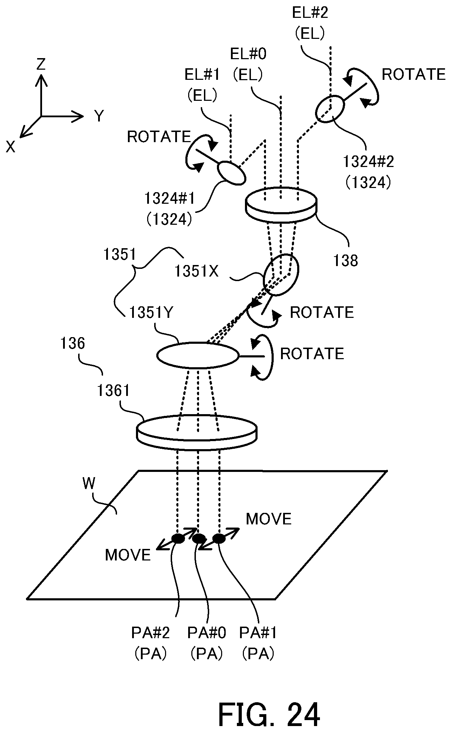

FIG. 23 and FIG. 24 illustrate one example of the configuration of the multi-lights generation optical system 132 in the third modified example that is configured to change the arrangement direction LD of the plurality of irradiation areas PA by the method that is different from the method for rotating the diffractive optical element 1321 around the rotational axis RX1. FIG. 23 is a cross-sectional view that illustrates the configuration of the multi-lights generation optical system 132 in the third modified example. FIG. 24 is a perspective view that illustrates the configuration of the multi-lights generation optical system 132 in the third modified example. In the below-described description, the multi-lights generation optical system 132 in the third modified example is referred to as a multi-lights generation optical system 132c.

As illustrated in FIG. 23 and FIG. 24, the multi-lights generation optical system 132c in the third modified example is different from the multi-lights generation optical system 132 described above in that it includes at least one Galvano mirror 1324. Incidentally, in the third modified example, an example in which the multi-lights generation optical system 132c includes two Galvano mirrors 1324#1 and 1324#2 will be described for the simple description. However, the multi-lights generation optical system 132c may include a single Galvano mirror 1324 or three or more Galvano mirrors 1324. Other feature of the multi-lights generation optical system 132c may be the same as other feature of the multi-lights generation optical system 132.

At least one Galvano mirror 1324 is positioned on the optical path of at least one of the plurality of processing lights EL. Incidentally, in the third modified example, an example in which the diffractive optical element 1321 generates three processing lights EL#0, EL#1, and EL#2 from the light source light SL, and the Galvano mirror 1324#1 is positioned on the optical path of the processing light EL#1, and the Galvano mirror 1324#2 is positioned on the optical path of the processing light EL#2 will be described for the simple description.

The Galvano mirror 1324#k (wherein, k is a variable number representing 1 or 2) is a deflection optical system (a deflection optical member) that is configured to deflect the processing light EL#k. The Galvano mirror 1324#k includes a deflection surface into which the processing light EL#k enters. The deflection surface may serve as a reflective surface that deflects the processing light EL#k by reflecting the processing light EL#k. The Galvano mirror 1324#k is an inclined angle variable mirror whose angle relative to an optical path of the processing light EL#k entering the Galvano mirror 1324#k is changeable. The Galvano mirror 1324#k deflects the processing light EL#k so that the irradiation area PA, onto which the processing light EL#k is irradiated on the workpiece W, moves. Specifically, the Galvano mirror 1324#k deflects the processing light EL#k so as to change a deflected angle of the processing light EL#k by changing an angle of the deflection surface of the Galvano mirror 1324#k. Namely, the emitting direction of the processing light EL#k is changed. As a result, the irradiation area PA moves due to the change in the angle of the deflection surface of the Galvano mirror 1324#k.

The processed light EL#k that has been deflected by the Galvano mirror 1324#k enters the Galvano mirror 1351 through the combining optical system 134 and the lens 138 which are not illustrated. The processed light EL#k that has entered the Galvano mirror 1351 is irradiated onto the workpiece W through the irradiation optical system 136.

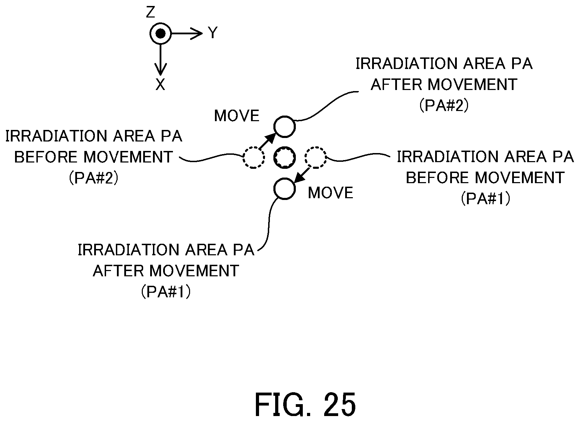

Especially in the third modified example, as illustrated in FIG. 25 that illustrates the plurality of irradiation areas PA, the Galvano mirror 1324#k deflects the processing light EL#k so that the arrangement direction of the plurality of irradiation areas PA changes by moving the irradiation area PA onto which the processing light EL#k is irradiated. For example, in FIG. 25, the Galvano mirrors 1324#1 and 1324#2 deflect the processing light EL#1 and EL#2, respectively, so that the irradiation area PA#1 irradiated with the processing light EL#1 and the irradiation area PA#2 irradiated with the processing light EL#2 move along a direction, which is inclined with respect to the arrangement direction LD (in the example illustrated in FIG. 25, the Y-axis direction) before the irradiation areas PA#1 and PA#2 are moved, by the same moving distance toward opposite directions. As a result, as illustrated in FIG. 25, the arrangement direction LD of the plurality of irradiation areas PA is changed. Incidentally, FIG. 25 illustrates an example in which the arrangement direction LD of the plurality of irradiation areas PA is changed from the Y-axis direction to the X-axis direction.

Even in this third modified example, an effect that is the same as the effect described above is achievable.

### (4-4) Other Modified Example

In the above-described description, the multi-lights generation optical system 132 divide the light source light SL to generate the plurality of processing lights EL by using the diffractive optical element 1321. However, the diffractive optical element 1321 is merely one example of the beam generation apparatus that is configured to generate the plurality of processing lights EL from the light source light SL, and the multi-lights generation optical system 132 may generate the plurality of processing lights EL from the light source light SL by using any beam-generating apparatus that is different from the diffractive optical element 1321. As one example, the multi-lights generation optical system 132 may generate the plurality of processing lights EL from the light source light SL by using an acousto-optic modulator (AOM) as the beam generation apparatus. When a high-frequency alternating voltage is applied to the acousto-optic modulator, a sinusoidal refractive index distribution is imparted to the acousto-optic modulator and the acousto-optic modulator is configured to serve as a phase-type diffraction grating. Therefore, the multi-lights generation optical system 132 may generate at least two of a plurality of diffracted lights as at least two of the plurality of processing lights EL by using the acousto-optic modulator, which is configured to serve as the diffraction grating, to divide the light source light SL into the plurality of diffracted lights. As another example, the multi-lights generation optical system 132 may generate the plurality of processing lights EL from the light source light SL by using a polarization beam splitter as the beam generation apparatus. In this case, the multi-lights generation optical system 132 may generate p-polarized light and s-polarized light as at least two of the plurality of processing lights EL by using the polarization beam splitter to split the light source light SL into the p-polarized light and the s-polarized light.

Even in a case where the multi-lights generation optical system 132 includes the beam generation apparatus that is different from the diffractive optical element 1321, the actuator 1323 may change the arrangement direction of the plurality of irradiation areas PA onto which the plurality of processing lights EL are irradiated, by rotating the beam generation apparatus around the desired rotational axis RX1. For example, in a case where the acousto-optic modulator is used as the beam generating apparatus, the actuator 1323 may change the arrangement direction of the plurality of irradiation areas PA onto which the plurality of processing lights EL are irradiated by rotating the acousto-optic modulator around the desired rotational axis RX1. For example, in a case where the polarization beam splitter is used as a beam generating apparatus, the actuator 1323 may change the arrangement direction of the plurality of irradiation areas PA onto which the plurality of processing lights EL are irradiated by rotating the polarization beam splitter around the desired rotational axis RX1. Even in this case, the optical axis 132EX of the multi-lights generation optical system 132 or the axis parallel to the optical axis 132EX may be used as the desired rotational axis RX1. Incidentally, in this case, an image rotator may be positioned on the optical path from the acousto-optic modulator to the workpiece W, and the arrangement direction LD of the plurality of irradiation areas PA may be changed by rotating this image rotator.

In the above-described description (especially, the first modified example), the processing unit 1 changes the relative positional relationship between the plurality of irradiation areas PA based on the curvature of the processing path PP. However, in a case where the curvature of the processing path PP is zero, namely, in a case where the processing path PP is a straight line, the processing unit 1 may change the relative positional relationship between the plurality of irradiation areas PA.

In the above-described description, the Galvano mirror 1313 includes two or more scanning mirrors. However, the Galvano mirror 1313 may be a two-axis Galvano mirror including a reflective surface that rotates around two axes that intersect (are orthogonal to) each other. Moreover, the Galvano mirror 1313 may be a Galvano mirror including a plurality of one-axis scanning mirrors whose reflective surfaces are positioned at positions that are optically conjugate by a relay optical system.

In a case where the Galvano mirror 1313 includes the plurality of scanning mirrors 1313X and 1313Y that are rotatable around first and second axes that intersect each other (alternatively, around first and second axes that are skew), there is a possibility that the plurality of processing lights EL entering the reflective surface the plurality of scanning mirrors (in the example of FIG. 3, the Y scanning mirror 1313Y) into which the plurality of processing lights EL enter second or later enters in a state where it deviates from a direction that is orthogonal to the rotational axis of the reflective surface of the Y scanning mirror 1313Y. As a result, there is a possibility that the arrangement direction LD of the plurality of irradiation areas PA of the plurality of processing lights EL on the workpiece W rotates around the optical axis 136EX of the irradiation optical system 136 or an axis parallel to the optical axis 136EX due to the rotation of the Y scanning mirror 1313Y.

In a case where the rotation of the arrangement direction LD of the irradiation areas PA exceeds an allowable value, the diffractive optical element 1321 of the multi-lights generation optical system 132 may be rotated around the optical axis thereof in accordance with the deflection angles of the reflective surfaces of the X scanning mirror 1313X and the Y scanning mirror 1313Y. Here, the reflective surfaces of the X scanning mirror 1313X and Y scanning mirror 1313Y may be referred to as light deflection surfaces. In this case, the rotational driving amount of the actuator 1323 that rotates the diffractive optical element 1321 may be controlled by the control unit 2 or the first or second control apparatus. The storage apparatus of the control unit 2 or the first or second control apparatus may store a relationship between a command value of the deflection angle that is transmitted to the Galvano mirror 1313 that is the deflection member and a command value of the rotational driving amount of the diffractive optical element 1321, and the control unit 2 or the first or second control apparatus may control the Galvano mirror 1313 that is the deflection member and the actuator 1323 that is a rotation driving apparatus by using the command value of the deflection angle and the command value of the rotational driving amount. Here, the rotational driving amount may be referred to as a control amount related to the emitting direction of the plurality of processing lights EL from the multi-lights generation optical system.

In the above-described description, the processing unit 1 includes the head driving system 141. However, the processing unit 1 may not include the head driving system 141. Namely, the processing head 13 may not be movable. In the above-described description, the processing unit 1 includes the stage driving system 161. However, the processing unit 1 may not include the stage driving system 161. Namely, the stage 15 may not be movable.

In the above-described description, the processing system SYS includes a single processing unit 1. However, the processing system SYS may include a plurality of processing units 1. In this case, the processing system SYS may include a plurality of control units 2 that control the plurality of processing units 1, respectively. As one example, the processing system SYS may include a first processing unit 1, a second processing unit 1, a first control unit 2 that controls the first processing unit 1, and a second control unit 2 that controls the second processing unit 1. Alternatively, the processing system SYS may include a control unit 2 that controls at least two of the plurality of processing units 1. As one example, the processing system SYS may include a first processing unit 1, a second processing unit 1, and a single control unit 2 that controls the first processing unit 1 and the second processing unit 1.

In the above-described description, the processing system SYS processes the workpiece W by irradiating the workpiece W with the processing light EL. Namely, the processing system SYS processes the workpiece W by irradiating the workpiece W with an energy beam in a form of light. However, the processing system SYS may process the workpiece W by irradiating the workpiece W with any energy beam that is different from the light. At least one of a charged particle beam, an electromagnetic wave and the like is one example of any energy beam. A least one of an electron beam, an ion beam and the like is one example of the charged particle beam. Moreover, in the above-described description, the processing system SYS processes the workpiece W by irradiating the workpiece W with the measurement light ML. However, the processing system SYS may measure the workpiece W by irradiating the workpiece W with any energy beam that is different from the light.

### (5) Supplementary Note

Regarding the above-described example embodiment, below described Supplementary notes are further disclosed.

### [Supplementary Note 1]

A processing method including:
forming a plurality of arranged irradiation areas on a surface of an object by irradiating the object with a plurality of processing beams, which are spatially separated from each other; and
processing the object by moving the plurality of irradiation areas on the surface of the object,
wherein
the forming includes:
   generating the plurality of processing beams;
   moving the plurality of processing beams propagating toward the object after the generating; and
   changing an arrangement direction along which the plurality of irradiation areas are arranged,
   the moving includes moving the plurality of irradiation areas along a target movement route on the surface of the object, and
   the changing includes changing the arrangement direction of the plurality of irradiation areas based on the target movement route.

### [Supplementary Note 2]

The processing method according to the Supplementary Note 1, wherein
the changing includes changing the arrangement direction in at least a part of a period during which the plurality of processing beams move.

### [Supplementary Note 3]

The processing method according to the Supplementary Note 1 or 2, wherein
the forming includes condensing each of the plurality of generated processing beams on the object,
the moving includes moving the plurality of irradiation areas of the plurality of processing beams by changing an angle of a deflection surface to which the plurality of processing beams enter.

### [Supplementary Note 4]

The processing method according to any one of the Supplementary Notes 1 to 3, wherein
the moving includes moving the plurality of processing beams so as to maintain a relative positional relationship between the plurality of processing beams propagating toward the object.

### [Supplementary Note 5]

The processing method according to any one of the Supplementary Notes 1 to 4, wherein
the changing includes changing the arrangement direction so that the arrangement direction at each position on the target movement route is a direction along the target movement route at each position.

### [Supplementary Note 6]

The processing method according to any one of the Supplementary Notes 1 to 5, wherein
the changing includes changing the arrangement direction so that the arrangement direction at each position on the target movement route is a direction intersecting the target movement route at each position.

### [Supplementary Note 7]

The processing method according to any one of the Supplementary Notes 1 to 6, wherein
the changing includes changing the arrangement direction so that the arrangement direction at each position on the target movement route is a direction orthogonal to the target movement route at each position.

### [Supplementary Note 8]

The processing method according to any one of the Supplementary Notes 1 to 7, wherein
the changing includes changing the arrangement direction so as to maintain, at each position on the target movement route, a relative positional relationship between the arrangement direction and a route direction along which the target movement route extends at each position.

### [Supplementary Note 9]

The processing method according to any one of the Supplementary Notes 1 to 8, wherein
the changing includes changing the arrangement direction of the plurality of irradiation areas based on an operation of the moving.

### [Supplementary Note 10]

The processing method according to the Supplementary Note 9, wherein
the moving includes moving, by using a deflection member that deflects the plurality of processing beams, positions of the plurality of irradiation areas on the surface of the object, and
the changing includes changing the arrangement direction of the plurality of irradiation areas based on an operation of the deflection member.

### [Supplementary Note 11]

The processing method according to the Supplementary Note 10, wherein
the moving includes controlling a deflection angle of a light deflection surface of the deflection member.

### [Supplementary Note 12]

The processing method according to the Supplementary Note 11, wherein
the changing includes changing the arrangement direction of the plurality of irradiation areas based on information related to the deflection angle from the deflection member.

### [Supplementary Note 13]

The processing method according to the Supplementary Note 11, wherein
the changing includes transmitting a command value of the deflection angle to the deflection member, and changing the arrangement direction of the plurality of irradiation areas by the second beam movement apparatus based on the command value.

### [Supplementary Note 14]

The processing method according to any one of the Supplementary Notes 11 to 13, wherein
the changing includes changing one or more emitting direction of emitting directions along which the plurality of processing beams are emitted.

### [Supplementary Note 15]

The processing method according to the Supplementary Note 14, wherein
the changing includes changing the arrangement direction of the plurality of irradiation areas based on a relationship between the deflection angle and a control amount related to the emitting direction.

### [Supplementary Note 16]

The processing method according to any one of the Supplementary Notes 9 to 15, wherein
the moving includes moving the plurality of irradiation areas by using two or more deflection mirrors each of which includes a reflective surface that is rotatable around a rotational axis.

### [Supplementary Note 17]

The processing method according to the Supplementary Note 16, wherein
the forming includes condensing each of the plurality of processing beams on the object by an irradiation optical system, and
at least one deflection mirror of the two or more deflection mirrors is positioned at a position that is distant from an entrance pupil position of the irradiation optical system.

### [Supplementary Note 18]

The processing method according to any one of the Supplementary Notes 1 to 17, wherein
the processing includes processing the object to form a groove on the object, and
the target movement route includes a target movement route that is along a direction along which the groove extends.

### [Supplementary Note 19]

The processing method according to any one of the Supplementary Notes 1 to 18, wherein
the object is used in a situation where the surface of the object is in contact with a fluid,
the processing includes processing the object to form, at each position on the surface of the object, a groove that extends along a streamline on the surface of the object at each position, and
the target movement route includes a target movement route that is along a direction along which the streamline extends.

### [Supplementary Note 20]

The processing method according to the Supplementary Note 18 or 19, wherein
the groove includes a groove by which a resistance of the surface of the workpiece W to the fluid is reducible.

### [Supplementary Note 21]

The processing method according to any one of the Supplementary Notes 1 to 20, wherein
the changing includes changing the arrangement direction of the plurality of irradiation areas by moving at least one of the plurality of processing beams propagating toward the object.

### [Supplementary Note 22]

The processing method according to any one of the Supplementary Notes 1 to 20, wherein
the forming includes condensing each of the plurality of processing beams on the object by an irradiation optical system, and
the changing includes changing the arrangement direction of the plurality of irradiation areas by rotating the plurality of processing beams, which propagates toward the object, around a rotational axis that is an optical axis of the irradiation optical system or that is an axis parallel to the optical axis.

### [Supplementary Note 23]

The processing method according to any one of the Supplementary Notes 1 to 22, wherein
forming includes forming the plurality of processing beams by using a beam generation apparatus, and
the changing includes changing the arrangement direction of the plurality of irradiation areas by using the beam generation apparatus.

### [Supplementary Note 24]

The processing method according to the Supplementary Note 21, wherein
the forming includes irradiating the object with the plurality of processing beams by using a processing optical system, and
the changing includes changing the arrangement direction of the plurality of irradiation areas by rotating the beam generation apparatus around a rotational axis that is an optical axis of the processing optical system or that is an axis parallel to the optical axis.

### [Supplementary Note 25]

The processing method according to the Supplementary Note 23 or 24, wherein
the beam generation apparatus includes a diffractive optical element that divides light beam from a light source to generate the plurality of processing beams, and
the changing includes changing the arrangement direction of the plurality of irradiation areas by rotating the diffractive optical element around a rotational axis that is an optical axis of the processing optical system or that is an axis parallel to the optical axis.

### [Supplementary Note 26]

The processing method according to any one of the Supplementary Notes 1 to 25, wherein
the changing includes changing the arrangement direction of the plurality of irradiation areas by using a deflection optical member to deflect one processing beam of the plurality of processing beams to thereby move one irradiation area, onto which the one processing beam is irradiated, of the plurality of irradiation areas on the surface of the object.

### [Supplementary Note 27]

The processing method according to any one of the Supplementary Notes 1 to 26, wherein
the changing includes changing the arrangement direction of the plurality of irradiation areas by using a plurality of deflection optical members each of which is configured to deflect the processing beam to move the irradiation area on the surface of the object.

### [Supplementary Note 28]

The processing method according to any one of the Supplementary Notes 1 to 27, wherein
generating the plurality of processing beams includes generating the plurality of processing beams from light beam that is generated by a light source.

### [Supplementary Note 29]

The processing method according to any one of the Supplementary Notes 1 to 28, wherein
the processing includes processing the object by irradiating the object with the plurality of processing beams that are spatially separated from each other along a direction intersecting a propagating direction of at least one of the plurality of processing beams.

### [Supplementary Note 30]

The processing method according to any one of the Supplementary Notes 1 to 29, wherein
the moving includes moving the plurality of irradiation areas in the same direction by the same movement distance.

### [Supplementary Note 31]

The processing method according to any one of the Supplementary Notes 1 to 30, wherein
the target movement route includes a first target movement route whose shape is a curved-shape and whose curvature is a first curvature and a second target movement route whose shape is a curved-shape and whose curvature is a second curvature that is different from the first curvature, and
a relative positional relationship between the plurality of irradiation areas moving along the first target movement route is different from a relative positional relationship between the plurality of irradiation areas moving along the second target movement route.

### [Supplementary Note 32]

The processing method according to the Supplementary Note 31, wherein
second curvature is larger than the first curvature, and
an interval between the plurality of irradiation areas moving along the second target movement route is smaller than an interval between the plurality of irradiation areas moving along the first target movement route.

### [Supplementary Note 33]

The processing method according to any one of the Supplementary Notes 1 to 32, wherein
the target movement route includes a third target movement route whose shape is a curved-shape and whose curvature is a third curvature and a fourth target movement route whose shape is a curved-shape and whose curvature is a fourth curvature that is different from the third curvature, and
the number of the plurality of irradiation areas moving along the third target movement route is different from the number of the plurality of irradiation areas moving along the fourth target movement route.

### [Supplementary Note 34]

The processing method according to the Supplementary Note 33, wherein
fourth curvature is larger than the third curvature, and
the control apparatus makes the number of the plurality of irradiation areas moving along the fourth target movement route be smaller than the number of the plurality of irradiation areas moving along the third target movement route.

### [Supplementary Note 35]

The processing method according to the Supplementary Note 33 or 34, wherein
single irradiation area moves along the fourth target movement route and at least two irradiation areas move along the third target movement route.

### [Supplementary Note 36]

The processing method according to any one of the Supplementary Notes 1 to 35, wherein
the target movement route includes a fifth target movement route whose shape is a linear-shape and a sixth target movement route whose shape is a linear-shape, and
the number of the plurality of irradiation areas moving along the fifth target movement route is different from the number of the plurality of irradiation areas moving along the sixth target movement route.

### [Supplementary Note 37]

The processing method according to the Supplementary Note 36, wherein
the number of the plurality of irradiation areas moving along the sixth target movement route is smaller than the number of the plurality of irradiation areas moving along the fifth target movement route.

### [Supplementary Note 38]

The processing method according to the Supplementary Note 36 or 37, wherein
single irradiation area moves along the sixth target movement route and at least two irradiation areas move along the fifth target movement route.

### [Supplementary Note 39]

The processing method according to any one of the Supplementary Notes 1 to 38, wherein
the target movement route includes a third target movement route whose shape is a curved-shape and whose curvature is a third curvature and a fourth target movement route whose shape is a curved-shape and whose curvature is a fourth curvature that is different from the third curvature, and
a length, which is along the third target movement route, of the plurality of irradiation areas moving along the third target movement route is different from a length, which is along the third target movement route, of the plurality of irradiation areas moving along the fourth target movement route.

### [Supplementary Note 40]

The processing method according to the Supplementary Note 39, wherein
fourth curvature is larger than the third curvature, and
the length of the plurality of irradiation areas moving along the fourth target movement route is shorter than the length of the plurality of irradiation areas moving along the third target movement route.

### [Supplementary Note 41]

The processing method according to the Supplementary Note 39 or 40, wherein
single irradiation area moves along the fourth target movement route and at least two irradiation areas move along the third target movement route.

### [Supplementary Note 42]

The processing method according to any one of the Supplementary Notes 1 to 41, wherein
the target movement route includes a fifth target movement route whose shape is a linear-shape and a sixth target movement route whose shape is a linear-shape, and
a length, which is along the fifth target movement route, of the plurality of irradiation areas moving along the fifth target movement route is different from a length, which is along the sixth target movement route, of the plurality of irradiation areas moving along the sixth target movement route.

### [Supplementary Note 43]

The processing method according to the Supplementary Note 42, wherein
the length of the plurality of irradiation areas moving along the sixth target movement route is shorter than the length of the plurality of irradiation areas moving along the fifth target movement route.

### [Supplementary Note 44]

The processing method according to the Supplementary Note 42 or 43, wherein
single irradiation area moves along the sixth target movement route and at least two irradiation areas move along the fifth target movement route.

### [Supplementary Note 45]

A processing method including:
forming a plurality of irradiation areas on a surface of an object by irradiating the object with a plurality of processing beams, which are spatially separated from each other, through an irradiation optical system to, and processing the object by moving the plurality of irradiation areas on the surface of the object,
wherein
the processing includes:
   generating the plurality of processing beams; and
   moving the plurality of processing beams, which propagates toward the object through the irradiation optical system, by using a bema movement apparatus to change deflected angles of the plurality of generated processing beams, and
   an entrance direction of one processing beam of the plurality of processing beams entering the beam movement apparatus is different from an entrance direction of another processing beam, which is different from the one processing beam, of the plurality of processing beams entering the beam movement apparatus.

### [Supplementary Note 46]

The processing method according to the Supplementary Note 45 comprising rotating the beam generation apparatus around a rotational axis.

### [Supplementary Note 47]

The processing method according to the Supplementary Note 46, wherein
the rotating includes rotating the beam generation apparatus in a second period that is at least a part of a first period during which the beam movement apparatus moves the plurality of processing beams.

### [Supplementary Note 48]

The processing method according to any one of the Supplementary Notes 45 to 47, wherein
the beam movement apparatus includes a deflection surface to which the plurality of processing beams enter, and
the moving includes changing the deflected angle by changing an angle of the deflection surface.

### [Supplementary Note 49]

A processing method including:
forming a plurality of irradiation areas on a surface of an object by irradiating the object with a plurality of processing beams, which are spatially separated from each other, and processing the object by moving the plurality of irradiation areas on the surface of the object; and
a control apparatus that controls the processing apparatus,
wherein
the processing includes:
   generating the plurality of processing beams; and
   condensing the plurality of generated processing beams to form a plurality of irradiation areas on the surface of the object, and
   moving each of the plurality of irradiation areas along a target movement route on the surface of the object.

### [Supplementary Note 50]

The processing method according to the Supplementary Note 49, wherein
the moving includes moving the plurality of irradiation areas, which are formed on the surface of the object, independently by changing a propagating direction of each of the plurality of processing beams entering the irradiation optical system.

At least a part of the feature of each example embodiment described above is allowed to be combined with at least another part of the feature of each example embodiment described above. A part of the feature of each example embodiment described above may not be used. Moreover, the disclosures of all publications and United States patents that are cited in each example embodiment described above are incorporated in the disclosures of the present application by reference if it is legally permitted.

The present invention is allowed to be changed, if desired, without departing from the essence or spirit of the invention which can be read from the claims and the entire specification, and a processing system, which involves such changes, is also intended to be within the technical scope of the present invention.

### Description of Reference Codes

- SYS: processing system
- 1: processing unit
- 13: processing head
- 131: processing optical system
- 1313: Galvano mirror
- 132: processing optical system
- 1321: diffractive optical element
- 1322: lens
- 1323: actuator
- 1324: Galvano mirror
- 133: measurement optical system
- 134: combining optical system
- 135: deflection optical system
- 1351: Galvano mirror
- 136: irradiation optical system
- 1361: fθ lens
- 2: control unit
- W: workpiece
- M: measurement target object
- EL: processing light
- ML: measurement light
- PA, MA: irradiation area
- PP: processing path
- PD: path direction
- LD: arrangement direction

## Claims

1. A processing system comprising:
a processing apparatus that irradiates an object with a plurality of processing beams, which are spatially separated from each other, to form a plurality of arranged irradiation areas on a surface of the object, and that processes the object by moving the plurality of irradiation areas on the surface of the object; and
a control apparatus that controls the processing apparatus,
wherein
the processing apparatus includes:
a beam generation apparatus that generates the plurality of processing beams;
a first beam movement apparatus to which the plurality of processing beams generated by the beam generation apparatus enter and that moves the plurality of processing beams propagating toward the object; and
a second beam movement apparatus that changes an arrangement direction along which the plurality of irradiation areas are arranged,
the control apparatus controls the first beam movement apparatus so that the plurality of irradiation areas move along a target movement route on the surface of the object, and
the control apparatus controls the second beam movement apparatus so as to change the arrangement direction of the plurality of irradiation areas based on the target movement route.

2. The processing system according to claim 1, wherein
the control apparatus changes the arrangement direction in at least a part of a period during which the first beam movement apparatus moves the plurality of processing beams.

3. The processing system according to claim 1 or 2, wherein
the processing apparatus includes an irradiation optical system that condenses each of the plurality of processing beams, which are through the first beam movement apparatus, on the object, and
the first beam movement apparatus includes a deflection surface to which the plurality of processing beams enter and moves the plurality of irradiation areas of the plurality of processing beams, which are through the first beam movement apparatus, by changing an angle of the deflection surface.

4. The processing system according to any one of claims 1 to 3, wherein
the first beam movement apparatus moves the plurality of processing beams so as to maintain a relative positional relationship between the plurality of processing beams propagating toward the object.

5. The processing system according to any one of claims 1 to 4, wherein
the control apparatus controls the second beam movement apparatus so that the arrangement direction at each position on the target movement route is a direction along the target movement route at each position.

6. The processing system according to any one of claims 1 to 5, wherein
the control apparatus controls the second beam movement apparatus so that the arrangement direction at each position on the target movement route is a direction intersecting the target movement route at each position.

7. The processing system according to any one of claims 1 to 6, wherein
the control apparatus controls the processing apparatus so that the arrangement direction at each position on the target movement route is a direction orthogonal to the target movement route at each position.

8. The processing system according to any one of claims 1 to 7, wherein
the control apparatus controls the processing apparatus so as to maintain, at each position on the target movement route, a relative positional relationship between the arrangement direction and a route direction along which the target movement route extends at each position.

9. The processing system according to any one of claims 1 to 8, wherein
the control apparatus changes the arrangement direction of the plurality of irradiation areas by the second beam movement apparatus based on an operation of the first beam movement apparatus.

10. The processing system according to claim 9, wherein
a first beam movement apparatus includes a deflection member that deflects the plurality of processing beams so that positions of the plurality of irradiation areas on the surface of the object move, and
the control apparatus changes the arrangement direction of the plurality of irradiation areas by the second beam movement apparatus based on an operation of the deflection member.

11. The processing system according to claim 10, wherein
the control apparatus controls a deflection angle of a light deflection surface of the deflection member.

12. The processing system according to claim 11, wherein
the control apparatus changes the arrangement direction of the plurality of irradiation areas by the second beam movement apparatus based on information related to the deflection angle from the deflection member.

13. The processing system according to claim 11, wherein
the control apparatus transmits a command value of the deflection angle to the deflection member, and changes the arrangement direction of the plurality of irradiation areas by the second beam movement apparatus based on the command value.

14. The processing system according to any one of claims 11 to 13, wherein
the second beam movement apparatus changes one or more emitting direction of emitting directions along which the plurality of processing beams are emitted.

15. The processing system according to claim 14, wherein
the control apparatus includes a storage apparatus that stores a relationship between the deflection angle and a control amount related to the emitting direction.

16. The processing system according to any one of claims 9 to 15, wherein
the first beam movement apparatus includes two or more deflection mirrors each of which includes a reflective surface that is rotatable around a rotational axis.

17. The processing system according to claim 16, wherein
the processing apparatus includes an irradiation optical system that condenses each of the plurality of processing beams, which are through the first beam movement apparatus, on the object, and
at least one deflection mirror of the two or more deflection mirrors is positioned at a position that is distant from an entrance pupil position of the irradiation optical system.

18. The processing system according to any one of claims 1 to 17, wherein
the processing apparatus processes the object to form a groove on the object, and
the target movement route includes a target movement route that is along a direction along which the groove extends.

19. The processing system according to any one of claims 1 to 18, wherein
the object is used in a situation where the surface of the object is in contact with a fluid, the processing apparatus processes the object to form, at each position on the surface of the object, a groove that extends along a streamline on the surface of the object at each position,and
the target movement route includes a target movement route that is along a direction along which the streamline extends.

20. The processing system according to claim 18 or 19, wherein
the groove includes a groove by which a resistance of the surface of the workpiece W to the fluid is reducible.

21. The processing system according to any one of claims 1 to 20, wherein
the control apparatus controls the processing apparatus so as to change the arrangement direction of the plurality of irradiation areas by moving at least one of the plurality of processing beams propagating toward the object.

22. The processing system according to any one of claims 1 to 20, wherein
the processing apparatus includes an irradiation optical system that condenses each of the plurality of processing beams on the object, and
the control apparatus controls the processing apparatus so as to change the arrangement direction of the plurality of irradiation areas by rotating the plurality of processing beams, which propagates toward the object, around a rotational axis that is an optical axis of the irradiation optical system or that is an axis parallel to the optical axis.

23. The processing system according to any one of claims 1 to 22, wherein
the control apparatus changes the arrangement direction of the plurality of irradiation areas by using the beam generation apparatus.

24. The processing system according to claim 21, wherein
the processing apparatus includes a processing optical system that includes the beam generation apparatus and the first beam movement apparatus, and
the second beam movement apparatus changes the arrangement direction of the plurality of irradiation areas by rotating the beam generation apparatus around a rotational axis that is an optical axis of the processing optical system or that is an axis parallel to the optical axis.

25. The processing system according to claim 23 or 24, wherein
the beam generation apparatus includes a diffractive optical element that divides light beam from a light source to generate the plurality of processing beams, and
the second beam movement apparatus changes the arrangement direction of the plurality of irradiation areas by rotating the diffractive optical element around a rotational axis that is an optical axis of the processing optical system or that is an axis parallel to the optical axis.

26. The processing system according to any one of claims 1 to 25, wherein
the second beam movement apparatus includes a deflection optical member that is configured to deflect one processing beam of the plurality of processing beams to move one irradiation area, onto which the one processing beam is irradiated, of the plurality of irradiation areas on the surface of the object, and
the control apparatus changes the arrangement direction of the plurality of irradiation areas by using the deflection optical member.

27. The processing system according to any one of claims 1 to 26, wherein
the second beam movement apparatus includes a plurality of deflection optical members that are configured to deflect the plurality of processing beams, respectively, to move the plurality of irradiation areas on the surface of the object, respectively, and
the control apparatus changes the arrangement direction of the plurality of irradiation areas by using at least one of the plurality of deflection optical members.

28. The processing system according to any one of claims 1 to 27, wherein
the processing system comprises a light source that is configured to generate light beam, and
the beam generation apparatus generates the plurality of processing beams from the light beam.

29. The processing system according to any one of claims 1 to 28, wherein
the processing apparatus processes the object by irradiating the object with the plurality of processing beams that are spatially separated from each other along a direction intersecting a propagating direction of at least one of the plurality of processing beams.

30. The processing system according to any one of claims 1 to 29, wherein
the first beam movement apparatus moves the plurality of irradiation areas in the same direction by the same movement distance.

31. The processing system according to any one of claims 1 to 30, wherein
the target movement route includes a first target movement route whose shape is a curved-shape and whose curvature is a first curvature and a second target movement route whose shape is a curved-shape and whose curvature is a second curvature that is different from the first curvature, and
the control apparatus controls the processing apparatus so that a relative positional relationship between the plurality of irradiation areas moving along the first target movement route is different from a relative positional relationship between the plurality of irradiation areas moving along the second target movement route.

32. The processing system according to claim 31, wherein
second curvature is larger than the first curvature, and
the control apparatus controls the processing apparatus so that an interval between the plurality of irradiation areas moving along the second target movement route is smaller than an interval between the plurality of irradiation areas moving along the first target movement route.

33. The processing system according to any one of claims 1 to 32, wherein
the target movement route includes a third target movement route whose shape is a curved-shape and whose curvature is a third curvature and a fourth target movement route whose shape is a curved-shape and whose curvature is a fourth curvature that is different from the third curvature, and
the control apparatus controls the processing apparatus so that the number of the plurality of irradiation areas moving along the third target movement route is different from the number of the plurality of irradiation areas moving along the fourth target movement route.

34. The processing system according to claim 33, wherein
fourth curvature is larger than the third curvature, and
the control apparatus controls the processing apparatus so that the number of the plurality of irradiation areas moving along the fourth target movement route is smaller than the number of the plurality of irradiation areas moving along the third target movement route.

35. The processing system according to claim 33 or 34, wherein
the control apparatus controls the processing apparatus so that single irradiation area moves along the fourth target movement route and at least two irradiation areas move along the third target movement route.

36. The processing system according to any one of claims 1 to 35, wherein
the target movement route includes a fifth target movement route whose shape is a linear-shape and a sixth target movement route whose shape is a linear-shape, and
the control apparatus controls the processing apparatus so that the number of the plurality of irradiation areas moving along the fifth target movement route is different from the number of the plurality of irradiation areas moving along the sixth target movement route.

37. The processing system according to claim 36, wherein
the control apparatus controls the processing apparatus so that the number of the plurality of irradiation areas moving along the sixth target movement route is smaller than the number of the plurality of irradiation areas moving along the fifth target movement route.

38. The processing system according to claim 36 or 37, wherein
the control apparatus controls the processing apparatus so that single irradiation area moves along the sixth target movement route and at least two irradiation areas move along the fifth target movement route.

39. The processing system according to any one of claims 1 to 38, wherein
the target movement route includes a third target movement route whose shape is a curved-shape and whose curvature is a third curvature and a fourth target movement route whose shape is a curved-shape and whose curvature is a fourth curvature that is different from the third curvature, and
the control apparatus controls the processing apparatus so that a length, which is along the third target movement route, of the plurality of irradiation areas moving along the third target movement route is different from a length, which is along the third target movement route, of the plurality of irradiation areas moving along the fourth target movement route.

40. The processing system according to claim 39, wherein
fourth curvature is larger than the third curvature, and
the control apparatus controls the processing apparatus so that the length of the plurality of irradiation areas moving along the fourth target movement route is shorter than the length of the plurality of irradiation areas moving along the third target movement route.

41. The processing system according to claim 39 or 40, wherein
the control apparatus controls the processing apparatus so that single irradiation area moves along the fourth target movement route and at least two irradiation areas move along the third target movement route.

42. The processing system according to any one of claims 1 to 41, wherein
the target movement route includes a fifth target movement route whose shape is a linear-shape and a sixth target movement route whose shape is a linear-shape, and
the control apparatus controls the processing apparatus so that a length, which is along the fifth target movement route, of the plurality of irradiation areas moving along the fifth target movement route is different from a length, which is along the sixth target movement route, of the plurality of irradiation areas moving along the sixth target movement route.

43. The processing system according to claim 42, wherein
the control apparatus controls the processing apparatus so that the length of the plurality of irradiation areas moving along the sixth target movement route is shorter than the length of the plurality of irradiation areas moving along the fifth target movement route.

44. The processing system according to claim 42 or 43, wherein
the control apparatus controls the processing apparatus so that single irradiation area moves along the sixth target movement route and at least two irradiation areas move along the fifth target movement route.

45. A processing system comprising:
a processing apparatus that irradiates an object with a plurality of processing beams, which are spatially separated from each other, through an irradiation optical system to form a plurality of irradiation areas on a surface of the object, and that processes the object by moving the plurality of irradiation areas on the surface of the object,
wherein
the processing apparatus includes:
a beam generation apparatus that generates the plurality of processing beams; and
a beam movement apparatus that moves the plurality of processing beams, which propagates toward the object through the irradiation optical system, by changing deflected angles of the plurality of processing beams generated by the beam generation apparatus, and
an entrance direction of one processing beam of the plurality of processing beams entering the beam movement apparatus is different from an entrance direction of another processing beam, which is different from the one processing beam, of the plurality of processing beams entering the beam movement apparatus.

46. The processing system according to claim 45, wherein
the processing apparatus includes a rotation apparatus that rotates the beam generation apparatus around a rotational axis.

47. The processing system according to claim 46, wherein
the rotation apparatus rotates the beam generation apparatus in a second period that is at least a part of a first period during which the beam movement apparatus moves the plurality of processing beams.

48. The processing system according to any one of claims 45 to 47, wherein
the beam movement apparatus includes a deflection surface to which the plurality of processing beams enter, and changes the deflected angle by changing an angle of the deflection surface.

49. A processing system comprising:
a processing apparatus that irradiates an object with a plurality of processing beams, which are spatially separated from each other, to form a plurality of irradiation areas on a surface of the object, and that processes the object by moving the plurality of irradiation areas on the surface of the object; and
a control apparatus that controls the processing apparatus,
wherein
the processing apparatus includes:
a beam generation apparatus that generates the plurality of processing beams; and
an irradiation optical system that condenses the plurality of processing beams generated by the beam generation apparatus to form a plurality of irradiation areas on the surface of the object,
the control apparatus moves each of the plurality of irradiation areas move along a target movement route on the surface of the object.

50. The processing system according to claim 49, wherein
the processing apparatus includes a beam position change apparatus that moves the plurality of irradiation areas, which are formed on the surface of the object, independently by changing a propagating direction of each of the plurality of processing beams entering the irradiation optical system.
